(19) Europäisches Patentamt
European Patent Office
Office européen des brevets

(11) EP 3 748 040 A1

(12) EUROPÄISCHE PATENTANMELDUNG

(43) Veröffentlichungstag:
**09.12.2020 Patentblatt 2020/50**

(51) Int Cl.:
***C25B 3/10*** *(2006.01)* ***C08K 5/00*** *(2006.01)*

(21) Anmeldenummer: **20176238.2**

(22) Anmeldetag: **25.05.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **04.06.2019 EP 19178157**

(71) Anmelder: **BASF SE**
**67056 Ludwigshafen am Rhein (DE)**

(72) Erfinder:
- **Grimm, Axel**
**67056 Ludwigshafen (DE)**
- **Pfeiffer, Matthias**
**67056 Ludwigshafen (DE)**
- **Morgenstern, Herbert**
**67056 Ludwigshafen (DE)**
- **Regenbrecht, Carolin**
**67056 Ludwigshafen (DE)**
- **Hahn, Lena**
**67056 Ludwigshafen (DE)**
- **Aust, Nicola Christiane**
**67056 Ludwigshafen (DE)**

(74) Vertreter: **BASF IP Association**
**BASF SE**
**GBI-C006**
**67056 Ludwigshafen (DE)**

# (54) ELEKTROCHEMISCHE WEICHMACHERSYNTHESE

(57) Verfahren zur elektrochemischen Herstellung einer Verbindung der allgemeinen Formel (I)

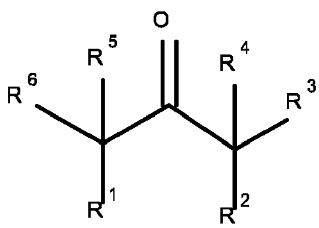

(I)

wobei
$R^1$ und $R^2$ unabhängig voneinander H oder $C_1$- bis $C_5$-Alkyl sind,
oder
$R^1$ und $R^2$ eine $C_2$- bis $C_9$-Alkandiylgruppe sind,
$R^3$ H, $CH_3$ oder eine *-$CH_2$-$CH_2$-C(=O)-O-$R^{3'}$ Gruppe ist und $R^{3'}$ $C_1$- bis $C_{13}$-Alkyl ist,
$R^4$ H oder eine *-$CH_2$-$CH_2$-C(=O)-O-$R^{4'}$ Gruppe ist und $R^{4'}$ $C_1$- bis $C_{13}$-Alkyl ist,
$R^5$ H, $CH_3$ oder eine *-$CH_2$-$CH_2$-C(=O)-O-$R^{5'}$ Gruppe ist und $R^{5'}$ $C_1$- bis $C_{13}$-Alkyl ist,
$R^6$ H oder eine *-$CH_2$-$CH_2$-C(=O)-O-$R^{6'}$ Gruppe ist und $R^{6'}$ $C_1$- bis $C_{13}$-Alkyl ist,
$R^3$, $R^4$, $R^5$ und $R^6$ soweit voneinander unabhängig sind, dass $R^3$, $R^4$, $R^5$ und $R^6$ nicht gleichzeitig H sind, $R^3$ und $R^5$ nicht gleichzeitig $CH_3$ und $R^4$ und $R^6$ H sind, $R^3$ nicht $CH_3$ und gleichzeitig $R^4$, $R^5$, $R^6$ H sind, $R^5$ nicht $CH_3$ und gleichzeitig $R^3$, $R^4$, $R^6$ H sind,
* den Verknüpfungspunkt mit den $\alpha$-Kohlenstoffatomen der Carbonylgruppe darstellt,
umfassend die Kupplung einer Verbindung der allgemeinen Formel (II)

EP 3 748 040 A1

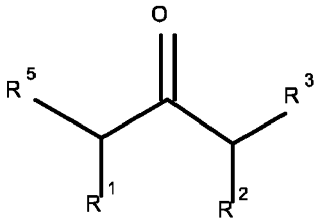

(II)

wobei $R^1$ und $R^2$ unabhängig voneinander H oder $C_1$- bis $C_5$-Alkyl sind,
oder
$R^1$ und $R^2$ eine $C_2$- bis $C_9$-Alkandiylgruppe sind
und $R^3$ und $R^5$ unabhängig voneinander H oder $CH_3$ sind,
mit einer Verbindung der allgemeinen Formel (III) wobei die Verbindung der allgemeinen Formel (III) ausgewählt ist aus der Gruppe bestehend aus Verbindungen der allgemeinen Formel (Iila), (IIIb), (IIIc), (IIId) oder einer beliebigen Mischung aus zwei oder mehr der zuvor genannten Verbindungen

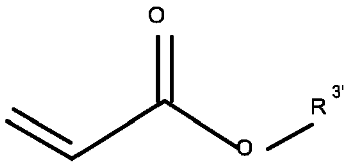

IIIa

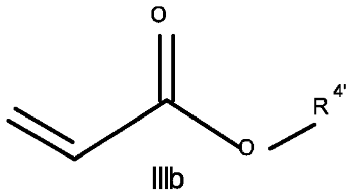

IIIb

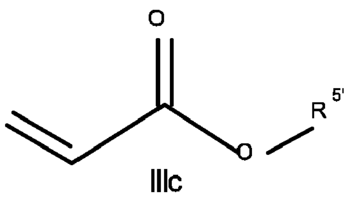

IIIc

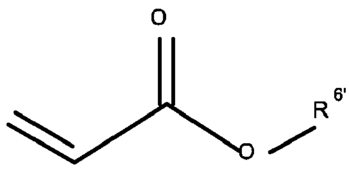

IIId

in einer ungeteilten Elektrolysezelle,
in Gegenwart eines polaren Lösungsmittels und eines Leitsalzes,
wobei das Molverhältnis zwischen Verbindungen der allgemeinen Formel (II) und der Summe der Verbindungen der allgemeinen Formel (III) 1:1 bis 1:10 beträgt.

## Beschreibung

Die vorliegende Erfindung betrifft ein Verfahren zur elektrochemischen Herstellung einer Verbindung der allgemeinen Formel (I), insbesondere ein Verfahren zur elektrochemischen Herstellung einer Verbindung der allgemeinen Formel (I) wobei Diethylketon, Cyclopentanon oder Cyclohexanon mit einer Verbindung der allgemeinen Formel (III) umgesetzt wird.

C-C Kupplungsreaktionen kommen im Bereich der organischen Synthese große Bedeutung beim Aufbau von Kohlenstoff-Gerüststrukturen zu. Aufgrund der Tatsache, dass bei elektrochemischen Reaktionen auf das Einführen von Abgangsgruppen und/oder den Einsatz von separaten Reagenzien zur Oxidation oder Reduktion von organischen Verbindungen verzichtet werden kann, stellen die Elektrosynthesen eine attraktive Alternative zu klassischen Syntheseoperationen dar, beispielsweise im Bereich der C-C-Kupplung.

Elektrochemische Reaktion zur C-C Kupplung sind dem Fachmann aus dem Stand der Technik bekannt (siehe beispielsweise Ullmann's Encyclopedia of Industrial Chemistry, Electrochemistry, 3. Organic Electrochemistry, doi:10.1002/14356007.o09_o04 - insbesondere Kapitel 3.2.5 Electrochemical Coupling).

Verbindungen der allgemeinen Formel (I) könnten das Potential bieten, attraktive Weichmacher für Kunststoffe, insbesondere für PVC (Polyvinylchlorid), darzustellen und sich damit als alternative Weichmacherklasse am Markt zu etablieren.

So wird beispielsweise in der US 3,076,775 oder in der JP49-85136 Tetraoctyl-2-oxo-1,1,3,3-cyclohexantetrapropionat als potentiell geeigneter Weichmacher für PVC beschrieben.

Aufgabe der vorliegenden Erfindung war es, ein Verfahren zur elektrochemischen Herstellung einer Verbindung der allgemeinen Formel (I) zur Verfügung zu stellen, insbesondere ein Verfahren zur elektrochemischen Herstellung einer Verbindung der allgemeinen Formel (I) wobei Cyclopentanon oder Cyclohexanon mit einer Verbindung der allgemeinen Formel (III) umgesetzt wird.

Die Aufgabe wird gelöst durch ein Verfahren zur elektrochemischen Herstellung von einer Verbindung der allgemeinen Formel (I)

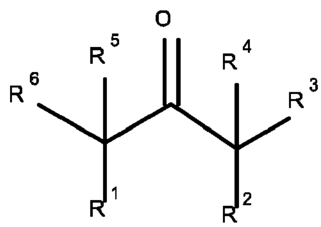

(I)

wobei

$R^1$ und $R^2$ unabhängig voneinander H oder $C_1$- bis $C_5$-Alkyl sind,

oder

$R^1$ und $R^2$ eine $C_2$- bis $C_9$-Alkandiylgruppe sind

$R^3$ H, $CH_3$ oder eine *-$CH_2$-$CH_2$-C(=O)-O-$R^{3'}$ Gruppe ist und $R^{3'}$ $C_1$- bis $C_{13}$-Alkyl ist,

$R^4$ H oder eine *-$CH_2$-$CH_2$-C(=O)-O-$R^{4'}$ Gruppe ist und $R^{4'}$ $C_1$- bis $C_{13}$-Alkyl ist,

$R^5$ H, $CH_3$ oder eine *-$CH_2$-$CH_2$-C(=O)-O-$R^{5'}$ Gruppe ist und $R^{5'}$ $C_1$- bis $C_{13}$-Alkyl ist,

$R^6$ H oder eine *-$CH_2$-$CH_2$-C(=O)-O-$R^{6'}$ Gruppe ist und $R^{6'}$ $C_1$- bis $C_{13}$-Alkyl ist,

$R^3$, $R^4$, $R^5$ und $R^6$ soweit voneinander unabhängig sind, dass $R^3$, $R^4$, $R^5$ und $R^6$ nicht gleichzeitig H sind, $R^3$ und $R^5$ nicht gleichzeitig $CH_3$ und $R^4$ und $R^6$ H sind, $R^3$ nicht $CH_3$ und gleichzeitig $R^4$, $R^5$, $R^6$ H sind, $R^5$ nicht $CH_3$ und gleichzeitig $R^3$, $R^4$, $R^6$ H sind,

* den Verknüpfungspunkt mit den $\alpha$-KoNenstoffatomen der Carbonylgruppe darstellt,

umfassend die Kupplung einer Verbindung der allgemeinen Formel (II)

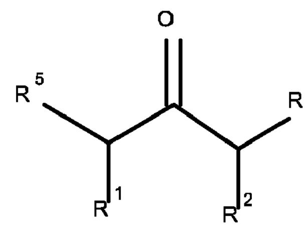

(II)

wobei $R^1$ und $R^2$ unabhängig voneinander H oder $C_1$- bis $C_5$-Alkyl sind,

oder

$R^1$ und $R^2$ eine $C_2$- bis $C_9$-Alkandiylgruppe sind

und $R^3$ und $R^5$ unabhängig voneinander H oder $CH_3$ sind,

mit einer Verbindung der allgemeinen Formel (III) wobei die Verbindung der allgemeinen Formel (III) ausgewählt ist aus der Gruppe bestehend aus Verbindungen der allgemeinen Formel (IIIa), (IIIb), (IIIc), (IIId) oder einer beliebigen Mischung aus zwei oder mehr der zuvor genannten Verbindungen

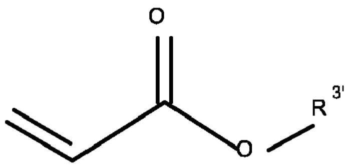

IIIa

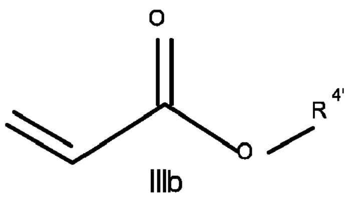

IIIb

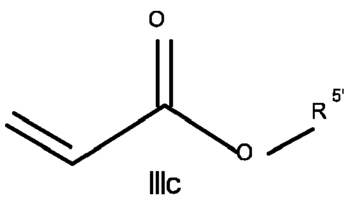

IIIc

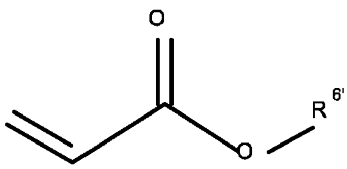

IIId

in einer ungeteilten Elektrolysezelle,
in Gegenwart eines polaren Lösungsmittels und eines Leitsalzes,
wobei das Molverhältnis zwischen Verbindungen der allgemeinen Formel (II) und der Summe der Verbindungen der allgemeinen Formel (III) eins zu eins bis eins zu zehn beträgt.

Ebenfalls Gegenstand der Erfindung ist eine Mischung von Verbindungen der allgemeinen Formel (I) wie sie durch das erfindungsgemäße Verfahren erhalten wird.

Weiterhin ist eine Mischung enthaltend Verbindungen der allgemeinen Formel (I) Gegenstand der vorliegenden Erfindung.

Auch ist die Verwendung einer oder mehrerer Verbindungen der allgemeinen Formel (I) oder die Verwendung der jeweils zuvor genannten Mischungen als Weichmacher für Kunststoffe oder als Weichmacher in Plastisolen Gegenstand der vorliegenden Erfindung.

Das erfindungsgemäße Verfahren dient der elektrochemischen Herstellung einer Verbindung der allgemeinen Formel (I) durch Kupplung einer Verbindung der allgemeinen Formel (II) mit einer Verbindung der allgemeinen Formel (III).

Verbindungen der allgemeinen Formel (III) sind Verbindungen der allgemeinen Formel (lila), (IIIb), (IIIc), (IIId) oder eine beliebige Mischung aus zwei oder mehr der zuvor genannten Verbindungen.

Ohne daran gebunden zu sein, kann die Kupplung einer Verbindung der allgemeinen Formel (II) mit einer Verbindung der allgemeinen Formel (III) formal als Insertion der Doppelbindung der Verbindung der allgemeinen Formel (III) in eine C-H Bindung am $\alpha$-Kohlenstoffatom zur Ketogruppe der Verbindung der allgemeinen Formel (II) beschrieben werden. Durch die Insertion der Doppelbindung bildet sich eine neue C-C Bindung zwischen dem $\alpha$-Kohlenstoffatom der Verbindung der allgemeinen Formel (II) und dem $\beta$-Kohlenstoffatom der Verbindung der allgemeinen Formel (III).

Bei einer Verbindung der allgemeinen Formel (I) sind $R^1$ und $R^2$ unabhängig voneinander H, $C_1$-bis $C_5$-Alkyl

oder eine $C_2$- bis $C_9$-Alkandiylgruppe.

$C_1$- bis $C_5$-Alkyl kann linear oder verzweigt sein. Bei $C_1$- bis $C_5$-Alkyl handelt es sich beispielsweise um Methyl, Ethyl, n-Propyl, iso-Propyl, n-Butyl, iso-Butyl, n-Pentyl, 2-Methylbutyl, oder 3-Methylbutyl.

Auch wenn $R^1$ und $R^2$ unabhängig voneinander sind, ist es bevorzugt, dass $R^1$ und $R^2$ gleich sind. So ist es bevorzugt, dass $R^1$ und $R^2$ gleich und $C_1$- bis $C_5$-Alkyl sind. Es ist weiter bevorzugt, dass $R^1$ und $R^2$ gleich und Methyl, Ethyl, n-Propyl, iso-Propyl, n-Butyl, iso-Butyl, n-Pentyl, 2-Methylbutyl oder 3-Methylbutyl sind.

Eine Verbindung der allgemeinen Formel (I) in der $R^1$ und $R^2$ eine $C_2$- bis $C_9$-Alkandiylgruppe sind kann wie folgt dargestellt werden:

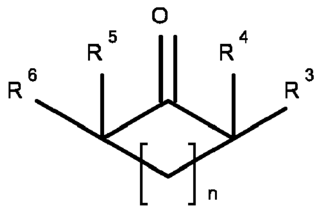

Bei einer $C_2$- bis $C_9$-Alkandiylgruppe handelt es sich um eine lineare Kette von n -($CH_2$)-Einheiten, wobei n eine ganze Zahl von 2 bis 9 ist. Es ist bevorzugt, dass n = 2, 3 oder 9 ist. Es ist weiter bevorzugt, dass n = 2 oder 3 ist. Es ist besonders bevorzugt, dass n = 3 ist. Für den Fall, dass n = 3 ist kann die lineare Kette von drei -($CH_2$)-Einheiten wie folgt ausgestaltet sein, - ($CH_2$)-($CH_2$)-($CH_2$)-, -(CH($CH_3$))-($CH_2$)-($CH_2$)-, -($CH_2$)-(CH($CH_3$)H$CH_2$)-, -($CH_2$)-($CH_2$)-(CH($CH_3$))-, oder -($CH_2$)-(CH(Cyclohexyl))-($CH_2$)-, wobei -($CH_2$)-($CH_2$)-($CH_2$)- bevorzugt ist.

$R^3$ ist H, $CH_3$ oder eine *-$CH_2$-$CH_2$-C(=O)-O$R^{3'}$ Gruppe, wobei * den Verknüpfungspunkt mit einem der $\alpha$-KoNenstorfatome der Carbonylgruppe darstellt. $R^{3'}$ ist $C_1$- bis $C_{13}$-Alkyl. $C_1$- bis $C_{13}$-Alkyl kann linear, verzweigt oder cyclisch sein. Bei $C_1$- bis $C_{13}$-Alkyl handelt es sich beispielsweise um Methyl, Ethyl, n-Propyl, iso-Propyl, n-Butyl, iso-Butyl, n-Pentyl, 2-Methylbutyl, 3-Methylbutyl, n-Hexyl, Cyclohexyl, 2-Methylpentyl, 3-Methylpentyl, 4-Methylpentyl, 3,3-Dimethylbutyl, 2-Ethylbutyl, n-Heptyl, 2-Methylhexyl, 2-Ethylpentyl, n-Octyl, Isooctyl, 2-Ethylhexyl, n-Nonyl, Isononyl, 2-Propylhexyl, n-Decyl, Isodecyl, 2-Propylheptyl, n-Undecyl, Isoundecyl, n-Dodecyl, Isododecyl, n-Tridecyl oder Isotridecyl. Es ist bevorzugt, dass $R^{3'}$ $C_1$- bis $C_{10}$-Alkyl ist. $C_1$- bis $C_{10}$-Alkyl kann linear, verzweigt oder cyclisch sein. Es ist weiter bevorzugt, dass $R^{3'}$ $C_8$-bis $C_{10}$-Alykl ist. $C_8$- bis $C_{10}$-Alkyl kann linear, oder verzweigt sein. Bei $C_8$- bis $C_{10}$-Alkyl handelt es sich beispielsweise um n-Octyl, Isooctyl, 2-Ethylhexyl, n-Nonyl, Isononyl, 2-Propylhexyl, n-Decyl, Isodecyl oder 2-Propylheptyl.

$R^4$ ist H oder eine *-$CH_2$-CH2-C(=O)-O$R^{4'}$ Gruppe, wobei * den Verknüpfungspunkt mit einem der $\alpha$-KoNenstorfatome der Carbonylgruppe darstellt. $R^{4'}$ ist $C_1$- bis $C_{13}$-Alkyl. $C_1$- bis $C_{13}$-Alkyl kann linear, verzweigt oder cyclisch sein. Bei $C_1$- bis $C_{13}$-Alkyl handelt es sich beispielsweise um Methyl, Ethyl, n-Propyl, iso-Propyl, n-Butyl, iso-Butyl, n-Pentyl, 2-Methylbutyl, 3-Methylbutyl, n-Hexyl, Cyclohexyl, 2-Methylpentyl, 3-Methylpentyl, 4-Methylpentyl, 3,3-Dimethylbutyl, 2-Ethylbutyl, n-Heptyl, 2-Methylhexyl, 2-Ethylpentyl, n-Octyl, Isooctyl, 2-Ethylhexyl, n-Nonyl, Isononyl, 2-Propylhexyl, n-Decyl, Isodecyl, 2-Propylheptyl, n-Undecyl, Isoundecyl, n-Dodecyl, Isododecyl, n-Tridecyl oder Isotridecyl. Es ist bevorzugt, dass $R^{4'}$ $C_1$- bis $C_{10}$-Alkyl ist. $C_1$- bis $C_{10}$-Alkyl kann linear, verzweigt oder cyclisch sein. Es ist weiter bevorzugt, dass $R^{4'}$ $C_8$- bis $C_{10}$-Alkyl ist. $C_8$- bis $C_{10}$-Alkyl kann linear, oder verzweigt sein. Bei $C_8$- bis $C_{10}$-Alkyl handelt es sich beispielsweise um n-Octyl, Isooctyl, 2-Ethylhexyl, n-Nonyl, Isononyl, 2-Propylhexyl, n-Decyl, Isodecyl oder 2-Propylheptyl.

$R^5$ ist H, $CH_3$, oder eine *-$CH_2$-$CH_2$-C(=O)-O$R^{5'}$ Gruppe, wobei * den Verknüpfungspunkt mit einem der $\alpha$-KoNenstorfatome der Carbonylgruppe darstellt. $R^{5'}$ ist $C_1$- bis $C_{13}$-Alkyl. $C_1$- bis $C_{13}$-Alkyl kann linear, verzweigt oder cyclisch sein. Bei $C_1$- bis $C_{13}$-Alkyl handelt es sich beispielsweise um Methyl, Ethyl, n-Propyl, iso-Propyl, n-Butyl, iso-Butyl, n-Pentyl, 2-Methylbutyl, 3-Methylbutyl, n-Hexyl, Cyclohexyl, 2-Methylpentyl, 3-Methylpentyl, 4-Methylpentyl, 3,3-Dimethylbutyl, 2-Ethylbutyl, n-Heptyl, 2-Methylhexyl, 2-Ethylpentyl, n-Octyl, Isooctyl, 2-Ethylhexyl, n-Nonyl, Isononyl, 2-Propylhexyl, n-Decyl, Isodecyl, 2-Propylheptyl, n-Undecyl, Isoundecyl, n-Dodecyl, Isododecyl, n-Tridecyl oder Isotridecyl. Es ist bevorzugt, dass $R^{5'}$ $C_1$- bis $C_{10}$-Alkyl ist. $C_1$- bis $C_{10}$-Alkyl kann linear, verzweigt oder cyclisch sein. Es ist weiter bevorzugt, dass $R^{5'}$ $C_8$-bis $C_{10}$-Alkyl ist. $C_8$- bis $C_{10}$-Alkyl kann linear, oder verzweigt sein. Bei $C_8$- bis $C_{10}$-Alkyl handelt es sich beispielsweise um n-Octyl, Isooctyl, 2-Ethylhexyl, n-Nonyl, Isononyl, 2-Propylhexyl, n-Decyl, Isodecyl oder 2-Propylheptyl.

$R^6$ ist H oder eine *-$CH_2$-$CH_2$-C(=O)-O$R^{6'}$ Gruppe, wobei * den Verknüpfungspunkt mit einem der $\alpha$-KoNenstorfatome der Carbonylgruppe darstellt. $R^{6'}$ ist $C_1$- bis $C_{13}$-Alkyl. $C_1$- bis $C_{13}$-Alkyl kann linear, verzweigt oder cyclisch sein. Bei $C_1$- bis $C_{13}$-Alkyl handelt es sich beispielsweise um Methyl, Ethyl, n-Propyl, iso-Propyl, n-Butyl, iso-Butyl, n-Pentyl, 2-Methylbutyl, 3-Methylbutyl, n-Hexyl, Cyclohexyl, 2-Methylpentyl, 3-Methylpentyl, 4-Methylpentyl, 3,3-Dimethylbutyl, 2-Ethylbutyl, n-Heptyl, 2-Methylhexyl, 2-Ethylpentyl, n-Octyl, Isooctyl, 2-Ethylhexyl, n-Nonyl, Isononyl, 2-Propylhexyl, n-Decyl, Isodecyl, 2-Propylheptyl, n-Undecyl, Isoundecyl, n-Dodecyl, Isododecyl, n-Tridecyl oder Isotridecyl. Es

ist bevorzugt, dass $R^{6'}$ $C_1$- bis $C_{10}$-Alkyl ist. $C_1$- bis $C_{10}$-Alkyl kann linear, verzweigt oder cyclisch sein. Es ist weiter bevorzugt, dass $R^{6'}$ $C_8$- bis $C_{10}$-Alkyl ist. $C_8$- bis $C_{10}$-Alkyl kann linear, oder verzweigt sein. Bei $C_8$- bis $C_{10}$-Alkyl handelt es sich beispielsweise um n-Octyl, Isooctyl, 2-Ethylhexyl, n-Nonyl, Isononyl, 2-Propylhexyl, n-Decyl, Isodecyl oder 2-Propylheptyl.

$R^3$, $R^4$, $R^5$ und $R^6$ sind insoweit voneinander unabhängig, dass $R^3$, $R^4$, $R^5$ und $R^6$ nicht gleichzeitig H sind, $R^3$ und $R^5$ nicht gleichzeitig $CH_3$ und $R^4$ und $R^6$ H sind, $R^3$ nicht $CH_3$ und gleichzeitig $R^4$, $R^5$, $R^6$ H sind, $R^5$ nicht $CH_3$ und gleichzeitig $R^3$, $R^4$, $R^6$ H sind. Es ist bevorzugt, dass $R^3$, $R^4$, gleich sind und nicht H und dass $R^5$ und $R^6$ H sind, oder dass $R^3$ und $R^4$ H sind und dass $R^5$ und $R^6$ gleich und nicht H sind. Ebenfalls ist es bevorzugt, dass $R^3$, $R^4$, $R^5$ gleich und nicht H sind und $R^6$ H ist, oder dass $R^3$, $R^4$, $R^6$ gleich und nicht H sind und $R^5$ H ist. Auch ist es bevorzugt, dass $R^3$, $R^5$, $R^6$ gleich und nicht H sind und $R^4$ H ist, oder dass $R^4$, $R^5$, $R^6$ gleich und nicht H sind und $R^3$ H ist. Daneben ist es bevorzugt, dass $R^3$, $R^4$, $R^5$, $R^6$ gleich und nicht H sind.

Besonders bevorzugte Verbindungen der allgemeinen Formel (I) sind:

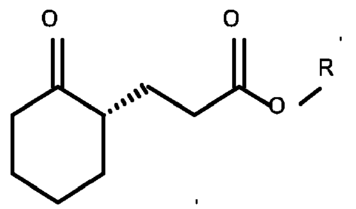

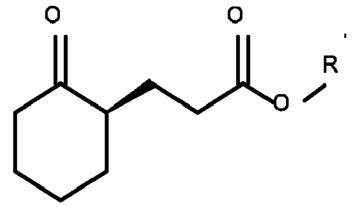

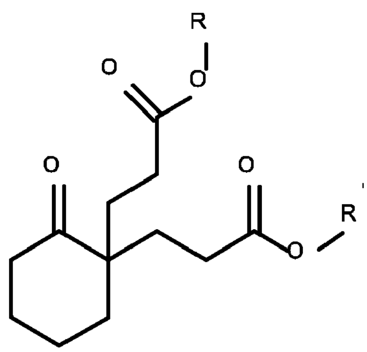

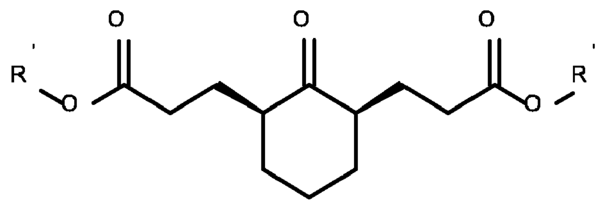

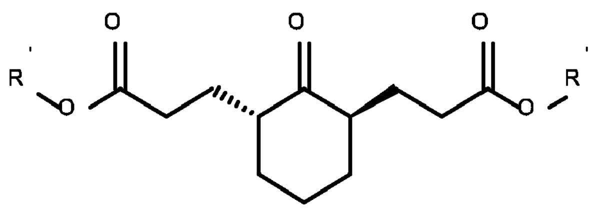

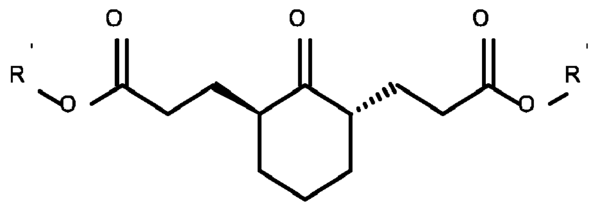

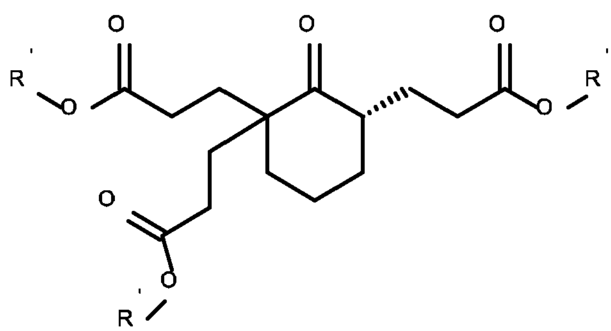

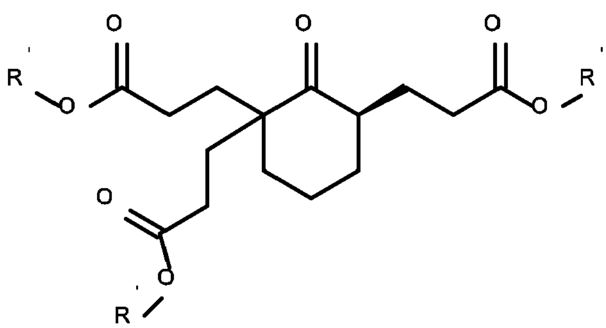

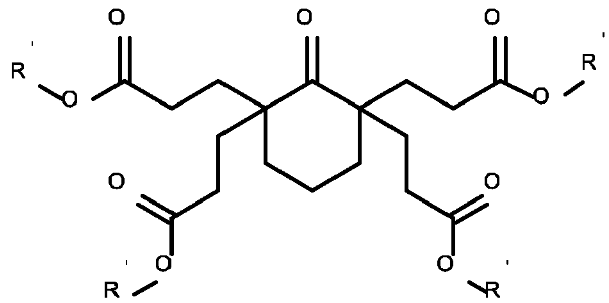

wobei R' für Methyl, Ethyl, n-Propyl, Isopropyl, n-Butyl, Isobutyl, 2-Ethylhexyl, n-Nonyl, Isononyl, 2-Propylheptyl oder Isodecyl steht,
oder

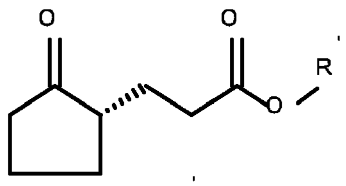

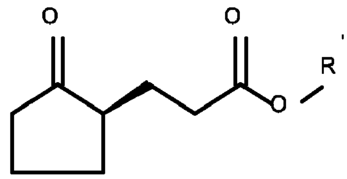

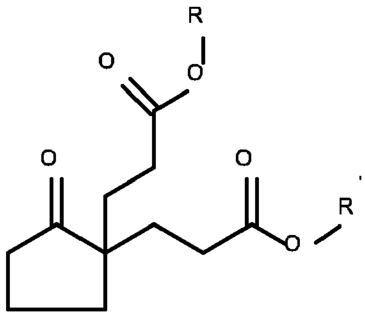

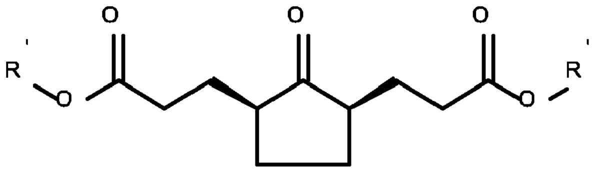

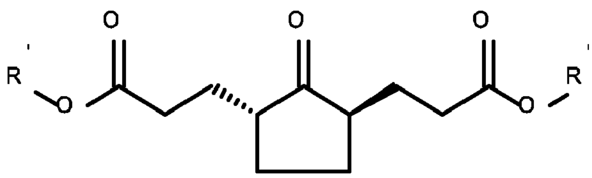

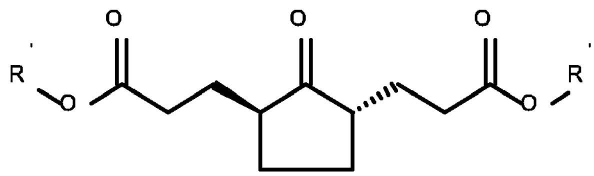

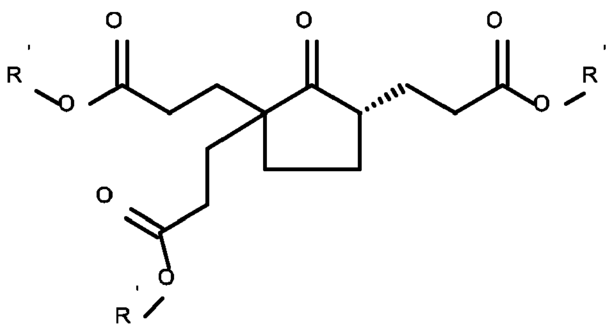

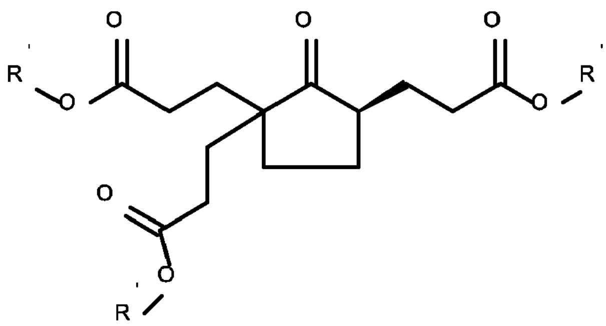

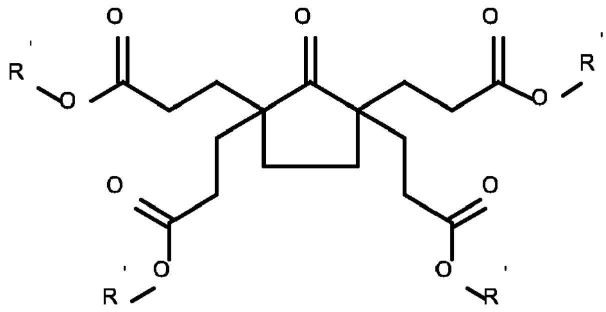

wobei R' für Methyl, Ethyl, n-Propyl, Isopropyl, n-Butyl, Isobutyl, 2-Ethylhexyl, n-Nonyl, Isononyl, 2-Propylheptyl oder Isodecyl steht.

Bei einer Verbindung der allgemeinen Formel (II) sind $R^1$ und $R^2$ gemäß der Verbindung der allgemeinen Formel (I) unabhängig voneinander H, $C_1$- bis $C_5$-Alkyl oder eine $C_2$- bis $C_3$-Alkan-diylgruppe. Bei einer Verbindung der allgemeinen Formel (II) handelt es sich beispielsweise um Aceton, Methylethylketon, 3-Pentanon, Cyclopentanon, Cyclohexanon, 3-Methylcyclohexanon, 4-Methylcyclohexanon, 4-Cyclohexylcyclohexanon oder Cyclododecanon. Es ist bevorzugt, dass es sich bei einer Verbindung der allgemeinen Formel (II) um 3-Pentanon, Cyclopentanon, Cyclohexanon oder Cyclododecanon handelt. Es ist weiter bevorzugt, dass es sich bei einer Verbindung der allgemeinen Formel (II) um Cyclopentanon, Cyclohexanon oder Cyclododecanon handelt. Es ist besonders bevorzugt, dass es sich bei einer Verbindung der allgemeinen Formel (II) um Cyclopentanon oder Cyclohexanon handelt, wobei Cyclohexanon weiter bevorzugt ist.

Bei Verbindungen der allgemeinen Formel (III), bzw. (lila), (IIIb), (IIIc), (IIId) sind $R^{3'}$, $R^{4'}$, $R^{5'}$ und $R^{6'}$ unabhängig voneinander. Es ist jedoch bevorzugt, dass $R^{3'}$, $R^{4'}$, $R^{5'}$ und $R^{6'}$ gleich sind.

Bei Verbindungen der allgemeinen Formel (III) ist $R^{x'}$ $C_1$- bis $C_{13}$-Alkyl, wobei X für 3,4,5 oder 6 steht. $C_1$- bis $C_{13}$-Alkyl kann linear, verzweigt oder cyclisch sein. Bei $C_1$- bis $C_{13}$-Alkyl handelt es sich beispielsweise um Methyl, Ethyl, n-Propyl, iso-Propyl, n-Butyl, iso-Butyl, n-Pentyl, 2-Methylbutyl, 3-Methylbutyl, n-Hexyl, Cyclohexyl, 2-Methylpentyl, 3-Methylpentyl, 4-Methylpentyl, 3,3-Dimethylbutyl, 2-Ethylbutyl, n-Heptyl, 1-Methylhexyl, 2-Methylhexyl, 1-Ethylpentyl, 2-Ethylpentyl, 1-Propylbutyl, n-Octyl, Isooctyl, 2-Ethylhexyl, n-Nonyl, Isononyl, 2-Propylhexyl, n-Decyl, Isodecyl, 2-Propylheptyl, n-Undecyl, Isoundecyl, n-Dodecyl, Isododecyl, n-Tridecyl oder Isotridecyl. Es ist bevorzugt, dass $R^{x'}$ $C_1$- bis $C_{10}$-Alkyl ist. $C_1$- bis $C_{10}$-Alkyl kann linear, verzweigt oder cyclisch sein. Es ist weiter bevorzugt, dass $R^{x'}$ $C_8$- bis $C_{10}$-Alkyl ist. $C_8$- bis $C_{10}$-Alkyl kann linear oder verzweigt sein. Bei $C_8$- bis $C_{10}$-Alkyl handelt es sich beispielsweise um n-Octyl, Isooctyl, 2-Ethylhexyl, n-Nonyl, Isononyl, 2-Propylhexyl, n-Decyl, Isodecyl oder 2-Propylheptyl.

Es ist besonders bevorzugt, dass $R^{3'}$ $R^{4'}$ $R^{5'}$ und $R^{6'}$ gleich und $C_1$- bis $C_{13}$-Alkyl sind. $C_1$- bis $C_{13}$-Alkyl kann linear, verzweigt oder cyclisch sein. Bei $C_1$- bis $C_{13}$-Alkyl handelt es sich beispielsweise um Methyl, Ethyl, n-Propyl, iso-Propyl, n-Butyl, iso-Butyl, n-Pentyl, 2-Methylbutyl, 3-Methylbutyl, n-Hexyl, Cyclohexyl, 2-Methylpentyl, 3-Methylpentyl, 4-Methylpentyl, 3,3-Dimethylbutyl, 2-Ethylbutyl, n-Heptyl, 1-Methylhexyl, 2-Methylhexyl, 1-Ethylpentyl, 2-Ethylpentyl, 1-Propylbutyl, n-Octyl, Isooctyl, 2-Ethylhexyl, n-Nonyl, Isononyl, 2-Propylhexyl, n-Decyl, Isodecyl, 2-Propylheptyl, n-Undecyl, Isoundecyl, n-Dodecyl, Isododecyl, n-Tridecyl oder Isotridecyl. Es ist weiter bevorzugt, dass $R^{3'}$, $R^{4'}$, $R^{5'}$, und $R^{6'}$ gleich und $C_1$- bis $C_{10}$-Alkyl sind. $C_1$- bis $C_{10}$-Alkyl kann linear, verzweigt oder cyclisch sein. Es ist weiter bevorzugt, dass $R^{3'}$, $R^{4'}$, $R^{5'}$ und $R^{6'}$ gleich und $C_8$- bis $C_{10}$-Alkyl sind. $C_8$- bis $C_{10}$-Alkyl kann linear oder verzweigt sein. Bei $C_8$- bis $C_{10}$-Alkyl handelt es sich beispielsweise um n-Octyl, Isooctyl, 2-Ethylhexyl, n-Nonyl, Isononyl, 2-Propylhexyl, n-Decyl, Isodecyl oder 2-Propylheptyl.

Verbindungen der allgemeinen Formel (III) können nach dem Fachmann bekannten Methoden hergestellt werden (siehe beispielsweise Ullmann's Encyclopedia of Industrial Chemsitry, Acrylic Acid and Derivatives, DOI 10.1002/14356007.a01_161.pub3). So können Verbindungen der allgemeinen Formel (III) beispielsweise durch säurekatalysierte Veresterung von Acrylsäure mit $C_1$- bis $C_{13}$-Alkoholen hergestellt werden. Veresterungsreaktionen von Acrylsäure können in der Gasphase oder in der Flüssigphase durchgeführt werden, wobei es bevorzugt ist, die Veresterungsreaktionen in der Flüssigphase durchzuführen. Je nach Herstellverfahren sind als Katalysatoren starke Säuren, wie p-Toluolsulfonsäure oder Schwefelsäure, oder saure Feststoffkatalysatoren, wie kationische Ionentauscherharze oder lewis-saure Metallsalze bevorzugt. Verbindungen der allgemeinen Formel (III) mit längerkettigen Alkylresten, wie $C_5$- bis $C_{13}$-Alkyl, können beispielsweise auch durch Umesterung von Acrylsäuremethyl- oder Acrylsäureethylester mit $C_5$- bis $C_{13}$-Alkoholen hergestellt werden. Verfahren zur Umesterung von Acrylsäureester sind dem Fachmann ebenfalls bekannt oder erschließen sich ihm aus dem Stand der Technik (siehe beispielsweise Ullmann's Encyclopedia of Industrial Chemistry, Esters, Organic, DOI 10.1002/14356007.a09_565.pub2, insbesondere Kapitel 3.2).

Verbindungen der allgemeinen Formel (III) enthalten im Allgemeinen einen Polymerisationsstabilator. Der Polymerisationsstabilisator dient dazu, die Tendenz zu unerwünschten radikalischen Polymerisationen zu reduzieren. Der Polymerisationsstabilisator wird Verbindungen der allgemeinen Formel (III) meist im Rahmen deren Herstellung und/oder

Lagerung hinzugefügt.

Als Polymerisationsstabilisatoren eignen sich die im Stand der Technik bekannten Polymerisationsstabilisatoren von (Meth)acrylsäure und/oder (Meth)acrylsäureester. So eigenen sich beispielsweise Kupfer(meth)acrylate, Kupferdithiocarbamate, Phenothiazine, phenolische Verbindungen, N-Oxyle, Phenylendiamine, Nitrosoverbindungen, Harnstoffe oder Thioharnstoffe. Diese Polymerisationsstabilisatoren können einzeln oder als beliebige Mischung eingesetzt werden. Bevorzugte Stabilisatoren sind Phenothiazine, phenolische Verbindungen, N-Oxyle oder beliebige Mischungen dieser.

Phenothiazine können beispielsweise Phenothiazin, Bis-(a-methylbenzyl)phenothiazin, 3,7-Dioctylphenothiazin, Bis-(a-dimethylbenzyl)phenothiazin oder eine beliebige Mischung dieser sein.

Phenolische Verbindungen können beispielsweise Hydrochinon, Hydrochinonmonomethylether, wie para-Methoxyphenol (MEHQ), Pyrogallol, Catechol, Resorcin, Phenol, Kresol, 2,4-Dimethyl-6-tert-butylphenol, 2,6-Di-tert-butyl-para-kresol oder eine beliebige Mischung dieser sein. Bevorzugte phenolische Verbindungen sind para-Methoxyphenol (MEHQ), 2,4-Dimethyl-6-tert-butylphenol, 2,6-Di-tert-butyl-para-kresol oder eine beliebige Mischung dieser.

N-Oxyle können beispielsweise Di-tert-butylnitroxid, 2,2,6,6-Tetramethyl-4-hydroxypiperidyl-1-oxyl, 2,2,6,6-Tetramethylpiperidyl-1-oxyl, 2,2,6,6-Tetramethylpiperidinoxyl, 4-Hydroxy-2,2,6,6-tetramethylpiperidinoxyl, 4,4',4"-Tris-1-(2,2,6,6-tetramethylpiperidinoxyl)phosphite oder eine beliebige Mischung dieser sein.

Der Polymerisationsstabilisator wird in den im Stand der Technik üblichen Mengen eingesetzt.

$C_1$- bis $C_{13}$-Alkohole können linear, verzweigt oder cyclisch sein. Bei $C_1$- bis $C_{13}$-Alkoholen handelt es sich beispielsweise um Methanol, Ethanol, n-Propanol, iso-Propanol, n-Butanol, iso-Butanol, n-Pentanol, 2-Methylbutan-1-ol, 3-Methylbutan-1-ol, n-Hexanol, Cyclohexanol, 2-Methyl-pentan-1-ol, 3-Methylpentan-1-ol, 4-Methylpentan-1-ol, 3,3-Dimethylbutan-1-ol, 2-Ethylbutan-1-ol, n-Heptanol, 2-Methylhexan-1-ol, 3-Methylhexan-1-ol, 2-Ethyl-1-pentanol, 3-Ethyl-1-pentanol, 2-Propylbutan-1-ol, n-Octanol, iso-Octanol, 2-Ethylhexanol, n-Nonanol, iso-Nonanol, 2-Propyl-heptan-1-ol, n-Decanol, iso-Decanol, n-Undecanol, iso-Undecanol, n-Dodecanol, iso-Dodecanol, n-Tridecanol oder iso-Tridecanol.

Im Rahmen der vorliegenden Erfindung handelt es sich bei iso-Octanol, iso-Nonanol, iso-Decanol, iso-Undecanol, iso-Dodecanol oder iso-Tridecanol um keine chemischen Einzelverbindungen, sondern um Isomerenmischungen. Die genaue Zusammensetzung einer solchen Isomerenmischung hängt von den Herstellbedingungen und/oder den eingesetzten Ausgangsverbindungen ab. Abhängig von den Herstellbedingungen und/oder den eingesetzten Ausgangsverbindungen sind in der WO 2015/082676 beispielhaft Zusammensetzungen möglicher Isomerenmischungen offenbart.

Iso-Octanol, iso-Nonanol, iso-Decanol, iso-Undecanol, iso-Dodecanol oder iso-Tridecanol können nach dem Fachmann bekannten Methoden hergestellt werden (siehe beispielsweise Ullmann's Encyclopedia of Industrial Chemistry, doi: 10.1002/14356007.a01_279.pub2 oder WO 2015/082676).

Das erfindungsgemäße Verfahren wird in einer ungeteilten Elektrolysezelle ausgeführt. Gegenüber geteilten Elektrolysezellen weisen ungeteilte Elektrolysezellen verschiedene Vorteile auf. So ist beispielsweise der Aufbau von ungeteilten Elektrolysezellen weniger komplex. So weisen ungetrennte Elektrolysezellen beispielsweise keine trennende Membran oder Diaphragmen auf, womit deren Anschaffung mit geringeren Investitionskosten verbunden ist. Auch weisen geteilte Zellen höhere innere Widerstände als ungeteilte Zellen auf, womit der Betrieb von geteilten Zellen mit höheren Stromkosten verbunden ist. Ein weiterer Vorteil von ungeteilten Zellen liegt beispielsweise in längeren Betriebsintervallen, da die in geteilten Zellen eingesetzten Membranen oder Diaphragmen Alterungs- und Verschleißprozessen unterliegen.

Die im erfindungsgemäßen Verfahren verwendete ungeteilte Elektrolysezelle weist eine oder mehrere Anoden und eine oder mehrere Kathoden auf. Weist die ungeteilte Elektrolysezelle mehrere Anoden und mehrere Kathoden auf, können die jeweiligen Elektroden parallel (monopolar) oder in Reihe (bipolar) geschaltet sein. Eine oder mehrere Anoden und eine oder mehrere Kathoden sind mit einer Gleichstromquelle, wie einer Batterie, einem Gleichstromgenerator oder einer Solarzelle verbunden.

Bei einer ungeteilten Zelle handelt es sich bevorzugt um eine Topfzelle, Plattenstapelzelle oder um eine Plattenrahmenzelle. Es ist besonders bevorzugt, dass es sich bei der ungeteilten Zelle um eine Plattenstapelzelle handelt.

Es ist besonders bevorzugt, dass eine Plattenstapelzelle verwendet wird, wobei die Elektroden bipolar geschaltet sind.

In dem erfindungsgemäßen Verfahren können die dem Fachmann bekannten Anoden- und Kathodenmaterialien eingesetzt werden (siehe beispielsweise Ullmann's Encyclopedia of Industrial Chemistry, doi: 10.1002/14356007.o09_o04, insbesondere Kapitel 4.2).

Das Anodenmaterial enthält bevorzugt Metalloxide wie $IrO_2$, $PbO_2$, $RuO_2$ oder Eisenoxid, Stahl oder Kohlenstoff. Es ist weiter bevorzugt, dass das Anodenmaterial Kohlenstoff enthält. Enthält das Anodenmaterial Kohlenstoff ist es bevorzugt, dass die Anode, bzw. Anoden als Graphitelektroden oder Gasdiffusionsschichtelektroden ausgestaltet sind.

Graphitelektroden sind dem Fachmann bekannt. Diese enthalten Graphit in poröser und/oder dicht gepackter Form. Gasdiffusionsschichtelektroden (GDL) sind dem Fachmann ebenfalls bekannt und umfassen ein Substrat und eine mikroporöse Schicht, die hauptsächlich Kohlenstoffpartikel enthält. Der Grad der Hydrophobisierung kann variiert werden, so dass Benetzung und Gaspermeabilität angepasst werden können. Geeignete GDLs sind in US 4,748,095,

US 4,931,168, oder US 5,618,392 beschrieben. Auf die Beschreibung der GDLs wird in vollem Umfang Bezug genommen. Für das erfindungsgemäße Verfahren geeignete, kommerziell erhältliche GDLs sind beispielsweise Elektroden aus der H2315 Serie von Freudenberg FCCT KG oder von der SGL Group. Die in diesem Prozess eingesetzten GDLs besitzen vorzugsweise keinen Katalysator auf der Oberfläche. Zudem ist es bevorzugt, dass es sich bei den Kohlenstoffpartikeln um Rußpartikel handelt.

Das Kathodenmaterial enthält bevorzugt Blei, Aluminium, Kupfer, Titan, Cadmium, Silber, Stahl, Edelstahl, Hastelloy-C (Ni - Mo - Fe oder Ni - Mo - Cr), Platin, Palladium, Nickel, oder Kohlenstoff. Es ist weiter bevorzugt, dass das Kathodenmaterial Kohlenstoff enthält. Enthält das Kathodenmaterial Kohlenstoff ist es bevorzugt, dass die Kathode, bzw. Kathoden als Graphitelektroden oder Gasdiffusionsschichtelektroden ausgestaltet sind.

In einer bevorzugten Ausführungsform handelt es sich bei der Anode, bzw. Anoden und der Kathode, bzw. Kathoden um Graphitelektroden. Ebenfalls bevorzugt handelt es sich bei der Anode, bzw. Anoden und der Kathode, bzw. Kathoden um Gasdiffusionsschichtelektroden.

Die Stromdichte in dem erfindungsgemäßen Verfahren beträgt bevorzugt 1 bis 150 mA/$cm^2$. Es ist besonders bevorzugt, dass die Stromdichte 30 bis 50 mA/$cm^2$ beträgt. Eine höhere Stromdichte führt zu einer höheren Raum-Zeit-Ausbeute, führt jedoch auch zu einer höheren Nebenproduktbildung, insbesondere Adipatbildung.

Es ist bevorzugt, dass der Stromfluss in dem erfindungsgemäßen Verfahren, abseits des An- und Ausschaltevorgangs so konstant wie möglich ist.

Das erfindungsgemäße Verfahren wird bevorzugt bei einer Temperatur von 5 bis 60°C und bei Atmosphärendruck oder leicht erhöhtem Druck ausgeführt.

Das erfindungsgemäße Verfahren kann als Batch-, Semi-Batch- oder als kontinuierliches Verfahren ausgeführt werden, wobei ein kontinuierliches Verfahren, insbesondere bei der Verwendung einer Plattenstapelzelle, bevorzugt ist.

In dem erfindungsgemäßen Verfahren können alle polaren Lösungsmittel eingesetzt werden, in denen die Edukte, Produkte und das verwendete Leitsalz eine ausreichend hohe Löslichkeit aufweisen. Es ist bevorzugt, dass sich das polare Lösungsmittel inert in dem erfindungsgemäßen Verfahren verhält. Inert bedeutet in diesem Zusammenhang, dass das Lösungsmittel keine unerwünschten Reaktionen mit sich selbst, den Edukten, Produkten und/oder dem verwendeten Leitsalz eingeht, oder zumindest nur in geringem Maße.

Polare Lösungsmittel, die in dem erfindungsgemäßen Verfahren eingesetzt werden können sind beispielsweise Wasser, Alkohole, wie Methanol, Ethanol oder iso-Butanol, Ester, wie Essigsäureethylester, Ether, wie THF oder Dioxan, Nitrile, wie Benzonitril oder Acetonitril, Dimethylformamid, Nitromethan, Dimethylsulfoxid oder eine Mischung aus zwei oder mehr der genannten Verbindungen.

Es ist bevorzugt, dass es sich bei dem polaren Lösungsmittel um ein polar aprotisches Lösungsmittel handelt. Polar aprotische Lösungsmittel sind beispielsweise, Ether, wie THF oder Dioxan, Nitrile, wie Benzonitril oder Acetonitril, Dimethylformamid, Nitromethan, Dimethylsulfoxid oder eine Mischung aus zwei oder mehr der genannten Verbindungen. Die Verwendung von polar aprotischen Lösungsmitteln hat den Vorteil, dass die Bildung von Adipaten durch Homokupplung von Verbindungen der allgemeinen Formel (III) reduziert wird.

Generell ist es von Vorteil, dass das polar aprotische Lösungsmittel weitgehend frei von Wasser und/oder anderen polar protischen Lösungsmitteln ist. Ein polar aprotisches Lösungsmittel ist weitgehend frei von Wasser und/oder anderen polar protischen Lösungsmitteln, wenn deren Gesamtgehalt unter 5 Gew.-%, bevorzugt unter 1 Gew.-% bezogen auf die Menge an polar a-protischem Lösungsmittel liegt.

Im Rahmen des erfindungsgemäßen Verfahren ist es weiter bevorzugt, dass es sich bei dem polar aprotischen Lösungsmittel um Acetonitril handelt.

Es ist bevorzugt, dass die Gesamtmenge an polarem Lösungsmittel 50 bis 80 Gewichtsprozent, beträgt. Die Gewichtsprozentangaben beziehen sich auf die Gesamtmenge an Verbindungen der allgemeinen Formel (II), die in dem erfindungsgemäßen Verfahren eingesetzt werden.

Ein Leitsalz wird zur Erhöhung der Leitfähigkeit und zur Erniedrigung des ohmschen Widerstands des in dem erfindungsgemäßen Verfahren eingesetzten Lösungsmittels verwendet. Generell können für das erfindungsgemäße Verfahren alle Leitsalze verwendet werde, die eine ausreichend hohe Löslichkeit in dem im erfindungsgemäßen Verfahren eingesetzten Lösungsmittel aufweisen und die inert sind. Inert bedeutet in diesem Zusammenhang, dass das Leitsalz keine unerwünschten Reaktionen mit sich selbst, den Edukten, Produkten und/oder dem verwendeten Lösungsmittel eingeht, oder zumindest nur in geringem Maße.

Bei einem Leitsalz handelt es sich bevorzugt um ein quartäres Ammoniumsalz, wie ein Tetrabutylammonium- oder Ethyltributylammoniumsalz, ein quartäres Phosphoniumsalz, ein bis-quartäres Ammonium- oder Phosphoniumsalz, oder um eine Mischung von zwei oder mehr der genannten Leitsalze. Bei einer Mischung von Leitsalzen können sich die Leitsalze in ihren Anionen und/oder Kationen voneinander unterscheiden. Anionen der oben genannten Salze sind beispielsweise Sulfat, Hydrogensulfat, Alkylsulfate, Arylsulfate, Alkylsulfonate, Arylsulfonate, Fluorid, Chlorid, Bromid, Iodid, Phosphate, wie Dihydrogenphosphat, Hydrogenphosphat oder Phosphat, Nitrat, Hydrogencarbonat, Carbonat, Alkoxide, wie Methanolat oder Ethanolat, Hydroxid, Tetrafluoroborat oder Perchlorat.

Ebenfalls ist es bevorzugt, dass es sich bei dem Leitsalz um eine ionische Flüssigkeit oder um eine Mischung

von verschiedenen ionischen Flüssigkeiten handelt. Ionische Flüssigkeiten, die in dem erfindungsgemäßen Verfahren eingesetzt werden können sind beispielsweise in "Ionic Liquids in Synthesis", ed. Peter Wasserscheid, Tom Welton, Wiley VCH, 2003, Kap. 1 bis 3 beschrieben. Bevorzugte ionische Flüssigkeiten für das erfindungsgemäße Verfahren sind Ammoniumtetraalkylsulfate, wobei Methyltributylammoniummethylsulfat (MTBS) besonders bevorzugt ist.

Die Gesamtmenge an Leitsalz, die in dem erfindungsgemäßen Verfahren eingesetzt wird, beträgt bevorzugt 0,1 bis 20 Gewichtsprozent, weiter bevorzugt 0,2 bis 15 Gewichtsprozent und besonders bevorzugt 0,25 bis 10 Gewichtsprozent. Insbesondere ist es bevorzugt, dass die Gesamtmenge an Leitsalz 1 bis 6 Gewichtsprozent beträgt. Die Gewichtsprozentangaben beziehen sich auf das Gesamtgewicht aus Lösungsmittel und Verbindungen der allgemeinen Formel (II) die in dem erfindungsgemäßen Verfahren eingesetzt werden.

Das Molverhältnis zwischen Verbindungen der allgemeinen Formel (II) und der Summe der Verbindungen der allgemeinen Formel (III) die in dem erfindungsgemäßen Verfahren eingesetzt werden beträgt 1:1 bis 1:10. Es ist bevorzugt, dass das Molverhältnis 1:1,5 bis 1:5 beträgt.

Wird das erfindungsgemäße Verfahren als Batch- oder Semi-Batchverfahren ausgeführt, ist es bevorzugt, dass Verbindungen der allgemeinen Formel (II), Leitsalz, zumindest ein Teil des polaren Lösungsmittels und zumindest ein Teil der Verbindungen der allgemeinen Formel (III) in der ungeteilten Zelle vorgelegt werden. So ist es beispielsweise von Vorteil, wenn das Molverhältnis zwischen Verbindungen der allgemeinen Formel (II) und der Summe der Verbindungen der allgemeinen Formel (III) zu Beginn der Reaktion 1:0,5 bis 1:1,5 beträgt. Über den Verlauf der Reaktion werden der vorgelegten Reaktionsmischung dann Verbindungen der allgemeinen Formel (III) kontinuierlich oder diskontinuierlich zugeführt, so dass sich ein Molverhältnis von 1:1 bis 1:10 und bevorzugt 1:1,5 bis 1:5 zwischen den eingesetzten Verbindungen der allgemeinen Formel (II) und den eingesetzten Verbindungen der allgemeinen Formel (III) ergibt. Verbindungen der allgemeinen Formel (III) können gelöst in dem polaren Lösungsmittel dem erfindungsgemäßen Verfahren zugeführt werden. Abhängig von den physikalischen Eigenschaften der Verbindungen der allgemeinen Formel (III) kann dadurch die Förderbarkeit der Verbindungen der allgemeinen Formel (III) positiv beeinflusst werden, beispielsweise durch Viskositätserniedrigung.

Das durch das erfindungsgemäße Verfahren erhaltene Reaktionsgemisch kann nach dem Fachmann bekannten Methoden, beispielsweise durch Destillation und/oder Extraktion aufgearbeitet werden. Die Aufarbeitung kann beispielsweise eine oder mehrere Destillationen und/oder Extraktionen umfassen, wobei Destillationen- und Extraktionen in beliebiger Reihenfolge erfolgen können. Durch Aufarbeitung des Reaktionsgemischs können Verbindungen der allgemeinen Formel (I) als weitgehend reine Einzelverbindungen oder als Mischungen von Verbindungen isoliert werden. Bei Einzelverbindungen kann es sich um Isomerenmischungen handeln.

Eine Destillation kann als einfache Destillation oder Rektifikation ausgeführt werden, wobei eine Rektifikation bevorzugt ist. Eine Destillation kann in einer oder mehreren, in Reihe oder parallel geschalteten, Kolonnen ausgeführt werden. Als Kolonnen für die Destillation eignen sich beispielsweise Bodenkolonnen, wie Ventilbodenkolonne. Kolonnen mit Packungen sind bevorzugt. Bei Packungen handelt es sich beispielsweise um regellose Schüttungen oder um geordnete Packungen. Geordnete Packungen sind bevorzugt. Die Zahl der Trennstufen kann der Fachmann aufgrund seines Fachwissens und durch wenige Routineversuche an die gewünschte Trennwirkung anpassen.

Extraktionsverfahren sind dem Fachmann aus dem Stand der Technik bekannt (siehe beispielsweise Ullmann's Encyclopedia of Industrial Chemistry, Flüssig - Flüssig Extraktion, doi: 10.1002/9783527623631.ch10). Eine Extraktion kann einstufig oder mehrstufig erfolgen. Eine Extraktion kann im Gleich- oder Gegenstrom ausgeführt werden. Als Apparaturen eignen sich beispielsweise Rührbehälter, Kolonnen und/oder Mixer-Settler-Apparaturen. Als Extraktionsmedium kann beispielsweise Wasser verwendet werden. Wasser kann hierzu mit Zusatzstoffen, wie Salzen, versetzt sein, um eine einfachere Phasentrennung zwischen organischer und wässriger Phase zu erreichen. Verbindungen der allgemeinen Formel (I) werden nach der Extraktion in der organischen Phase erhalten und können anschließend weiter aufgearbeitet werden, beispielsweise durch Destillation und/oder durch Abtrennung der leichter flüchtigen Verbindungen.

Das durch das erfindungsgemäße Verfahren erhaltene Reaktionsgemisch kann vor oder nach der Aufarbeitung einer Umesterung unterzogen werden. Umesterungsreaktionen sind dem Fachmann bekannt (siehe beispielsweise Ullmann's Encyclopedia of Industrial Chemistry, Esters, Organic, DOI 10.1002/14356007.a09_565.pub2, insbesondere Kapitel 3.2). Das nach der Umesterung erhaltene Reaktionsgemisch kann dann wiederum nach dem Fachmann bekannten Methoden, beispielsweise durch Extraktion und/oder Destillation aufgearbeitet werden.

Gegenstand der vorliegenden Erfindung ist auch eine Mischung von Verbindungen der allgemeinen Formel (I), enthaltend:

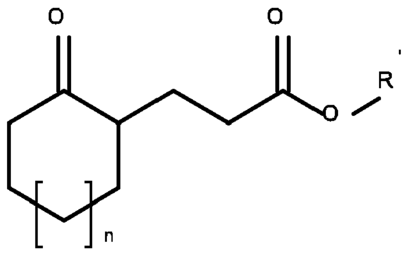

(Ia)

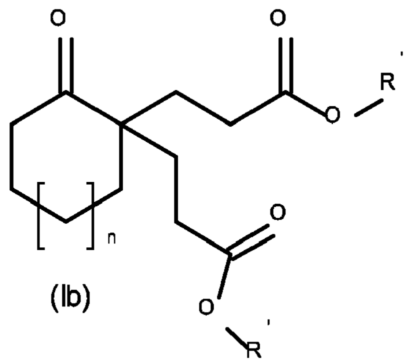

(Ib)

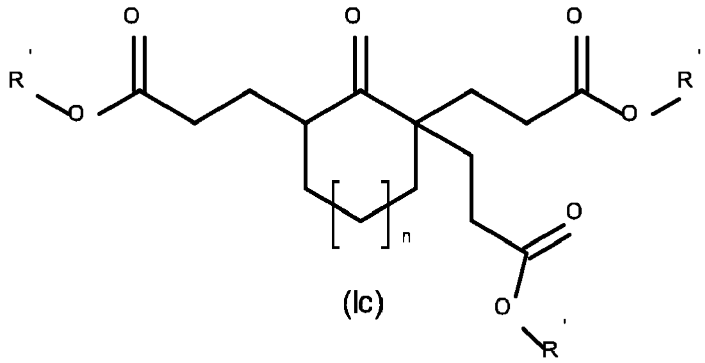

(Ic)

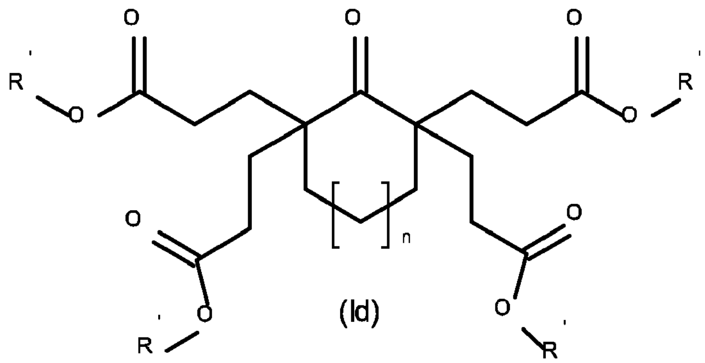

(Id)

wobei

R’ für $C_8$- bis $C_{10}$-Alkyl steht,
n für alle Verbindungen in der Mischung 0 oder 1 ist,
Verbindung (Ia) mit 0 bis 40 Gewichtsprozent enthalten ist,
Verbindung (Ib) mit 0 bis 60 Gewichtsprozent enthalten ist,
Verbindung (Ic) mit 0 bis 60 Gewichtsprozent enthalten ist,
Verbindung (Id) mit 0 bis 75 Gewichtsprozent enthalten ist,

wobei sich die Gewichtsprozentangaben der Verbindungen (Ia), (Ib), (Ic), (Id) in Summe auf 100 Prozent addieren und sich die Gewichtsprozentangaben auf die Gesamtmenge der in der Mischung enthaltenen Verbindungen der allgemeinen Formel (Ia), (Ib), (Ic) und (Id) beziehen.

Ebenfalls Gegenstand der Erfindung ist die Verwendung einer solchen Mischung als Weichmacher für Kunststoffe, insbesondere als Weichmacher für PVC Homo- oder Copolymere.

Demnach ist auch die Verwendung einer oder mehrerer Verbindungen der allgemeinen Formel (I) als Weichmacher für Kunststoffe, insbesondere als Weichmacher für PVC Homo- oder Copolymere Gegenstand der vorliegenden Erfindung.

Speziell ist die Verwendung einer Mischung von Verbindungen der allgemeinen Formel (I), wie sie durch das erfindungsgemäße Verfahren erhalten wird, ggf. nach Aufarbeitung des Reaktionsgemisches, als Weichmacher für

Kunststoffe, insbesondere als Weichmacher für PVC Homo- oder Copolymere Gegenstand der vorliegenden Erfindung.

Neben der Verwendung als Weichmacher für Kunststoffe eignen sich Verbindungen der allgemeinen Formel (I) oder Mischungen von Verbindungen der allgemeinen Formel (I) als Weichmacher in Plastisolen, insbesondere in Plastisolen die PVC Homo- oder Copolymere enthalten.

Beispiele

Die Beispiele sind nicht einschränkend auszulegen, sondern dienen der Veranschaulichung der vorliegenden Erfindung.

Graphitelektroden:

Physikalische Daten:

Rohdichte: 1,73 g/cm$^3$
Porosität offen: 18%
Max. Korngröße: 0,4 mm
Spez. el. Widerstand: II = 10, ⊥ = 11 Ωμm
Biegfestigkeit: ‖ = ⊥ =16, N/mm$^2$
Druckfestigkeit: ‖ = ⊥ = 36 N/mm$^2$
Zugfestigkeit: ‖ = ⊥ = 8 N/mm$^2$
Ausdehnungskoeff., (lin. 20/200°C): ‖ = 2,7, ⊥ = 3,4 μm/(Km)
Wärmeleitfähigkeit: ‖ = 130, ⊥ = 120 W/Km
Aschewert: < 0,1 %

Die MKUS-Elektroden wurden von der Firma SGL CARBON GROUP bezogen.

NMR:

Die NMR-Spektren wurden jeweils in deuteriertem Dichlormethan aufgenommen.

Gerät: Bruker Avance III 500 US

Messfrequenz für 13C-NMR: 125 MHz
Messfrequenz für 1H-NMR: 500 MHz
Messtemperatur: 295,3 K

GC:

| | | |
|---|---|---|
| Methode: | kapillares GC/MS mit Detektion positiver Ionen nach Elektronenionisation (EI) und chemischer Ionisation (CI) mit Ammoniak | |
| Gerät: | GC (Agilent 7890A) gekoppelt mit zwei MSDs (Agilent 5975C) für EI und CI | |
| Reagentien: | Ammoniak (BASF) | |
| Parameter: | GC Bedingungen | |
| | Säule: | DB1 |
| | Länge: | 30 m |
| | Innendurchmesser: | 0,25 mm |
| | Filmdicke: | 1 μm |
| | Trägergas: | Helium |
| | Fluss: | 1,4 mL/min |
| | Split ratio: | 10:1 |
| | Ofentemperatur: | 80 °C für 5 min<br>8 °C/min bis 300 °C,<br>120 min isothermal |
| | Eingangstemperatur: | 250 °C |

(fortgesetzt)

| | | |
|---|---|---|
| | Innentemperatur: | 300 °C |
| | Injektionsvolumen: | 0,1 µl |
| | | |
| | MS Bedingungen EI | |
| | Scan range: | 25-785 amu |
| | Ionization energy: | 70 eV |
| | | |
| | MS Bedingungen CI | |
| | Scan range: | 50-810 amu |

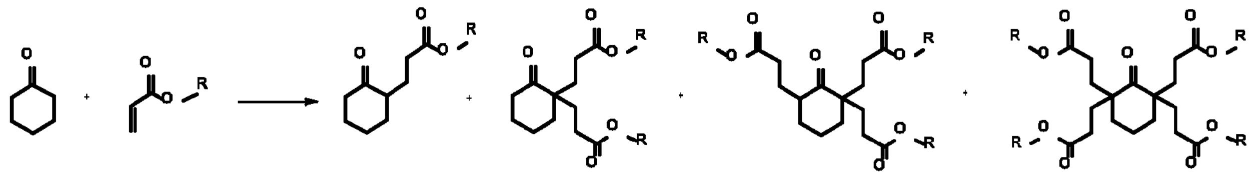

a-g 1a-g 2a-g 3a-g 4a-g

**R: a = 2-ethylhexyl**
**b = methyl**
**c = 2-propylhexyl**
**d = iso-nonyl**
**e = tert-butyl**
**f = n-butyl**
**g = iso-butyl**

5a – g:

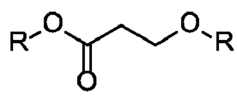

6a-g:

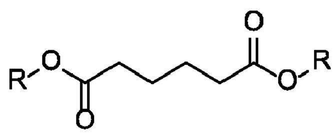

1. Umsetzung von Cyclohexanon mit 2-Ethylhexylacrylat; R = a

Apparatur: ungeteilte Plattenstapelzelle mit 3 Graphit-Elektroden (31.6 $cm^2$, ca. 2 mm Abstand zwischen den Elektroden)
Anode: Graphit
Kathode: Graphit
Elektrolyt: 70,0 g Cyclohexanon (10,0 Gew%)
131,4 g 2-Ethylhexylacrylat (18,77 Gew%)
477,6 g Acetonitril (68,2 Gew%)
21,0 g Methyltributylammoniummethylsulfat (3,0 Gew%)
Stromdichte: 20 $mA/cm^2$
Temperatur: 40 °C
Elektrolyse mit 0,25 F/mol Cyclohexanon
Der Elektrolyt wurde mit einer Strömungsgeschwindigkeit von 100 l/h durch die Zelle gepumpt. Nach 0,05 und

0,1 F/mol wurden jeweils zusätzliche 65,7g 2-Ethylhexylacrylat zugegeben. Nach Ablauf der Reaktion wurde das Lösungsmittel zunächst bei 90°C im Vakuum entfernt und das Rohprodukt anschließend in Methyltertbutylether (MTBE) gelöst und mit gesättigter $NaHC0_3$ und NaCl Lösung gewaschen. Die organische Phase wurde über Natriumsulfat getrocknet und das Lösungsmittel im Vakuum entfernt. Das Rohprodukt wurde gaschromatographisch untersucht.

GC-Analyse (Angaben in Flächenprozent):

17,7% für 1a, 33,6% für 2a und 23,7% für 3a. Der Nachweis für die Bildung des Tetraesters 4a erfolgte mittels NMR-Spektroskopie.

Isolierung Verbindung 1a:

Verbindung 1a wurde mittels Vakuumdestillation in einer Ausbeute von 16,7% und einer Reinheit von 91% erhalten.

2. Umsetzung von Cyclohexanon mit Methylacrylat; R=b

Apparatur: ungeteilte Plattenstapelzelle mit 3 GDL-Elektroden aufgelegt auf Graphit (31,6 $cm^2$, ca. 2 mm Abstand zwischen den Elektroden)
Anode: GDL
Kathode: GDL
Elektrolyt: 70,0 g Cyclohexanon (10,0 Gew%)
184,0 g Methylacrylat (26,3 Gew%)
425,0 g Acetonitril (60,7 Gew%)
21,0 g Methyltributylammoniummethylsulfat (3,0 Gew%)
Stromdichte: 20 $mA/cm^2$
Temperatur: 40 °C
Elektrolyse mit 0,7 F/mol Cyclohexanon

Der Elektrolyt wurde mit einer Strömungsgeschwindigkeit von 100 l/h durch die Zelle gepumpt. Nach 0,3 F/mol wurden zusätzliche 30,7g Methylacrylat zugegeben. Nach Ablauf der Reaktion wurde das Lösungsmittel zunächst im Vakuum entfernt und das Rohprodukt anschließend in Methyltertbutylether (MTBE) aufgenommen und mit gesättigter $NaHC0_3$ und NaCl Lösung gewaschen. Die vereinigte organische Phase wurde über Natriumsulfat getrocknet und das Lösungsmittel im Vakuum entfernt. Das Rohprodukt wurde gaschromatographisch untersucht.

GC-Analyse (Angaben in Flächenprozent):

Umsatz von 86,3% des eingesetzten Cyclohexanons,
Selektivität für die Bildung der einzelnen Komponenten: 6,1 % für 1b, 9,6% für 2b, 5,1% für 3b und 38,4% für 4b.

Isolierung Verbindung 4b:

Das Rohprodukt wurde mittels Vakuumdestillation fraktioniert und Verbindung 4b wurde in einer Ausbeute von 4,5% und einer Reinheit von 82% erhalten.

3. Umsetzung von Cyclohexanon mit 2-Propylheptylacrylat; R=c

Apparatur: ungeteilte Plattenstapelzelle mit 3 GDL-Elektroden aufgelegt auf Graphit (31,6 $cm^2$, ca. 2 mm Abstand zwischen den Elektroden)
Anode: GDL
Kathode: GDL
Elektrolyt: 60,0 g Cyclohexanon (10,0 Gew%)
129,8 g 2-Propylheptylacrylat (21,6 Gew%)
398,2 g Acetonitril (66,3 Gew%)
12,0 g Methyltributylammoniummethylsulfat (2,0 Gew%)
Stromdichte: 20 $mA/cm^2$
Temperatur: 40 °C
Elektrolyse mit 0,35 F/mol Cyclohexanon

Der Elektrolyt wurde mit einer Strömungsgeschwindigkeit von 100 l/h durch die Zelle gepumpt. Nach 0,15 und

0,25 F/mol wurden jeweils zusätzliche 64,9 g 2-Propylheptylacrylat zugegeben. Nach Ablauf der Reaktion wurde das Lösungsmittel zunächst im Vakuum entfernt und das Rohprodukt anschließend in Methyltertbutylether (MTBE) aufgenommen und mit gesättigter $NaHC0_3$ und NaCl Lösung gewaschen. Die vereinigte organische Phase wurde über Natriumsulfat getrocknet und das Lösungsmittel im Vakuum entfernt. Das Rohprodukt wurde gaschromatographisch untersucht.

GC-Analyse (Angaben in Flächenprozent):

Selektivität für die Bildung der einzelnen Komponenten: 18,7 % für 1c und 44,0% für 2c.

4. Umsetzung von Cyclohexanon mit Iso-Nonylacrylat; R=d

Apparatur: ungeteilte Plattenstapelzelle mit 3 Graphit-Elektroden (31,6 $cm^2$, ca. 2 mm Abstand zwischen den Elektroden)
Anode: Graphit
Kathode: Graphit
Elektrolyt: 60,0 g Cyclohexanon (10,0 Gew%)
121,2 g iso-Nonylacrylat (20,2 Gew%)
400,8 g Acetonitril (66,8 Gew%)
18,0 g Methyltributylammoniummethylsulfat (3,0 Gew%)
Stromdichte: 20 $mA/cm^2$
Temperatur: 40 °C
Elektrolyse mit 0,35 F/mol Cyclohexanon

Der Elektrolyt wurde mit einer Strömungsgeschwindigkeit von 100 l/h durch die Zelle gepumpt. Nach Ablauf der Reaktion wurde das Lösungsmittel zunächst im Vakuum entfernt und das Rohprodukt anschließend in Methyltertbutylether (MTBE) aufgenommen und mit gesättigter $NaHC0_3$ und NaCl Lösung gewaschen. Die vereinigte organische Phase wurde über Natriumsulfat getrocknet und das Lösungsmittel im Vakuum entfernt. Das Rohprodukt wurde gaschromatographisch untersucht.

GC-Analyse (Angaben in Flächenprozent):

Selektivität für die Bildung der einzelnen Komponenten: 38,2 % für 1d und 24,4% für 2d.

5. Umsetzung von Cyclohexanon mit tert-Butylacrylat; R=e

Apparatur: ungeteilte Plattenstapelzelle mit 3 Graphit-Elektroden (31,6 $cm^2$, ca. 2 mm Abstand zwischen den Elektroden)
Anode: Graphit
Kathode: Graphit
Elektrolyt: 70,0 g Cyclohexanon (10,0 Gew%)
91,4 g tert-Butylacrylat (13,1 Gew%)
517,6 g Acetonitril (73,9 Gew%)
21,0 g Methyltributylammoniummethylsulfat (3,0 Gew%)
Stromdichte: 20 $mA/cm^2$
Temperatur: 40 °C
Elektrolyse mit 0,65 F/mol Cyclohexanon

Der Elektrolyt wurde mit einer Strömungsgeschwindigkeit von 100 l/h durch die Zelle gepumpt. Nach 0,05 und 0,15 F/mol wurden jeweils zusätzliche 45,7 g tert-Butylacrylat zugegeben. Nach Ablauf der Reaktion wurde das Lösungsmittel zunächst im Vakuum entfernt und das Rohprodukt anschließend in Methyltertbutylether (MTBE) aufgenommen und mit gesättigter $NaHC0_3$ und NaCl Lösung gewaschen. Die vereinigte organische Phase wurde über Natriumsulfat getrocknet und das Lösungsmittel im Vakuum entfernt. Das Rohprodukt wurde gaschromatographisch untersucht.

GC-Analyse (Angabe in Flächenprozent):

Selektivität für die Bildung der einzelnen Komponenten: 20,0 % für 1e und 21,9 % für 2e.

6. Umsetzung von Cyclohexanon mit n-Butylacrylat; R=f

Apparatur: ungeteilte Plattenstapelzelle mit 3 Graphit-Elektroden (31,6 $cm^2$, ca. 2 mm Abstand zwischen den Elektroden)
Anode: Graphit
Kathode: Graphit
Elektrolyt: 70,0 g Cyclohexanon (10,0 Gew%)
91,4 g n-Butylacrylat (13,1 Gew%)
517,6 g Acetonitril (73,9 Gew%)
21,0 g Methyltributylammoniummethylsulfat (3,0 Gew%)
Stromdichte: 20 $mA/cm^2$
Temperatur: 40 °C
Elektrolyse mit 0,2 F/mol Cyclohexanon

Der Elektrolyt wurde mit einer Strömungsgeschwindigkeit von 100 l/h durch die Zelle gepumpt. Nach 0,05, 0,1 und 0,15 F/mol wurden jeweils zusätzliche 45,7 g n-Butylacrylat zugegeben. Nach Ablauf der Reaktion wurde das Lösungsmittel zunächst im Vakuum entfernt und das Rohprodukt anschließend in Methyltertbutylether (MTBE) aufgenommen und mit gesättigter $NaHC0_3$ und NaCl Lösung gewaschen. Die vereinigte organische Phase wurde über Natriumsulfat getrocknet und das Lösungsmittel im Vakuum entfernt. Das Rohprodukt wurde gaschromatographisch untersucht.

GC-Analyse (Angaben in Flächenprozent):

Selektivität für die Bildung der einzelnen Komponenten: 21,0 % für 1f, 19,4 % für 2f, 13,4 für 3f und 33,2 für 4f.

7. Umsetzung von Cyclohexanon mit iso-Butylacrylat; R=g

Apparatur: ungeteilte Plattenstapelzelle mit 3 Graphit-Elektroden (31,6 $cm^2$, ca. 2 mm Abstand zwischen den Elektroden)
Anode: Graphit
Kathode: Graphit
Elektrolyt: 70,0 g Cyclohexanon (10,0 Gew%)
91,4 g iso-Butylacrylat (13,1 Gew%)
517,6 g Acetonitril (73,9 Gew%)
21,0 g Methyltributylammoniummethylsulfat (3,0 Gew%)
Stromdichte: 20 $mA/cm^2$
Temperatur: 40 °C
Elektrolyse mit 0,2 F/mol Cyclohexanon

Der Elektrolyt wurde mit einer Strömungsgeschwindigkeit von 100 l/h durch die Zelle gepumpt. Nach 0,05 und 0,15 F/mol wurden jeweils zusätzliche 45,7 g iso-Butylacrylat zugegeben. Nach Ablauf der Reaktion wurde das Lösungsmittel zunächst im Vakuum entfernt und das Rohprodukt anschließend in Methyltertbutylether (MTBE) aufgenommen und mit gesättigter $NaHC0_3$ und NaCl Lösung gewaschen. Die vereinigte organische Phase wurde über Natriumsulfat getrocknet und das Lösungsmittel im Vakuum entfernt. Das Rohprodukt wurde gaschromatographisch untersucht.

GC-Analyse (Angaben in Flächenprozent):

Selektivität für die Bildung der einzelnen Komponenten: 14,3 % für 1g, 17,3 % für 2g, 11,1 % für 3g und 25,2 % für 4f.

8. Umsetzung von Cyclopentanon mit 2-Ethylhexylacrylat

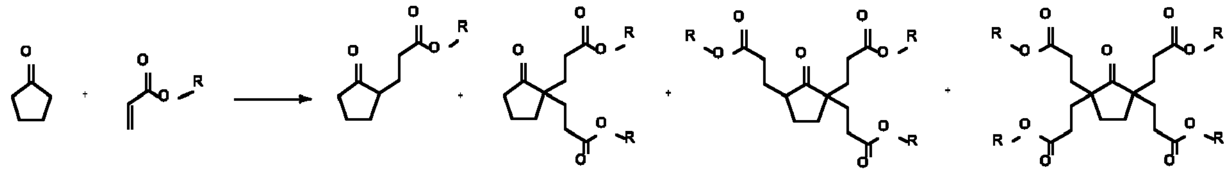

R: 2-ethylhexyl 1h 2h 3h 4h

Apparatur: Becherglastopfzelle
Anode: Graphit
Kathode: Graphit
Elektrolyt: 7,0 g Cyclopentanon (10,0 Gew%)
15,3 g 2-Ethylhexylacrylat (21,9 Gew%)
45,6 g Acetonitril (65,1 Gew%)
2,1 g Methyltributylammoniummethylsulfat (3,0 Gew%)
Stromdichte: 20 mA/cm$^2$
Temperatur: 40 °C
Elektrolyse mit 0,25 F/mol Cyclohexanon

Die Umsetzung und Aufarbeitung erfolgte analog obigen Beispielen.

Basierend auf GC und GC-MS Analysen der rohen Reaktionsmischung wurde folgende Selektivität für die Bildung der einzelnen Komponenten bestimmt: 13,4% für 1h, 28,3% für 2h, 3,8% für 3h und 7,7 % für 4h.

9. Umsetzung von Diethylketon mit 2-Ethylhexylacrylat

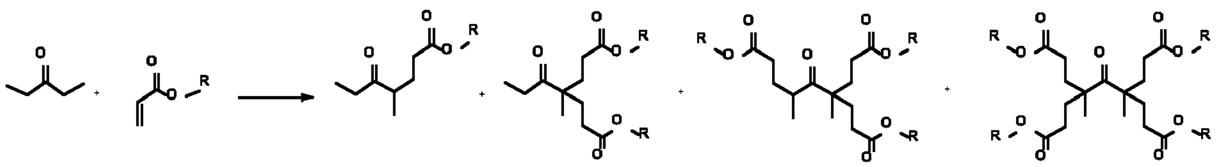

R: 2-ethylhexyl 1i 2i 3i 4i

Apparatur: Becherglastopfzelle
Anode: Graphit
Kathode: Graphit
Elektrolyt: 7,0 g Diethylketon (10,0 Gew%)
15,0 g 2-Ethylhexylacrylat (21,4 Gew%)
45,9 g Acetonitril (65,6 Gew%)
2,1 g Methyltributylammoniummethylsulfat (3,0 Gew%)
Stromdichte: 20 mA/cm$^2$
Temperatur: 40 °C
Elektrolyse mit 0,25 F/mol Cyclohexanon

Die Umsetzung und Aufarbeitung erfolgte analog obigen Beispielen.

Basierend auf GC und GC-MS Analysen der rohen Reaktionsmischung wurde folgende Selektivität für die Bildung der einzelnen Komponenten bestimmt: 22,2 % für 1i, 22,9% für 2i, 19,2% für 3i.

10. Umsetzung von Aceton mit 2-Ethylhexylacrylat

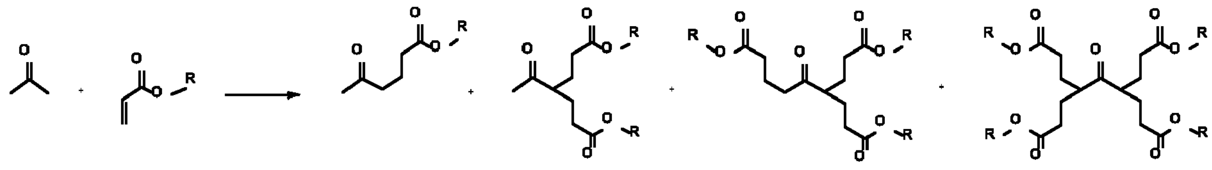

R: 2-ethylhexyl 1j 2j 3j 4j

Apparatur: Becherglastopfzelle
Anode: Graphit
Kathode: Graphit
Elektrolyt: 7,0 g Aceton (10,0 Gew%)
22,2 g 2-Ethylhexylacrylat (31,7 Gew%)
38,7 g Acetonitril (55,3 Gew%)
2,1 g Methyltributylammoniummethylsulfat (3,0 Gew%)
Stromdichte: 20 mA/cm$^2$
Temperatur: 40 °C
Elektrolyse mit 0,25 F/mol Cyclohexanon

Die Umsetzung und Aufarbeitung erfolgte analog obigen Beispielen.

Basierend auf GC und GC-MS Analysen der rohen Reaktionsmischung wurde folgende Selektivität für die Bildung der einzelnen Komponenten bestimmt: 5,5 % für 1j, 6,2 % für 2j und 2,9 % für 3j.

11. Umsetzung von Ethylmethylketon mit 2-Ethylhexylacrylat

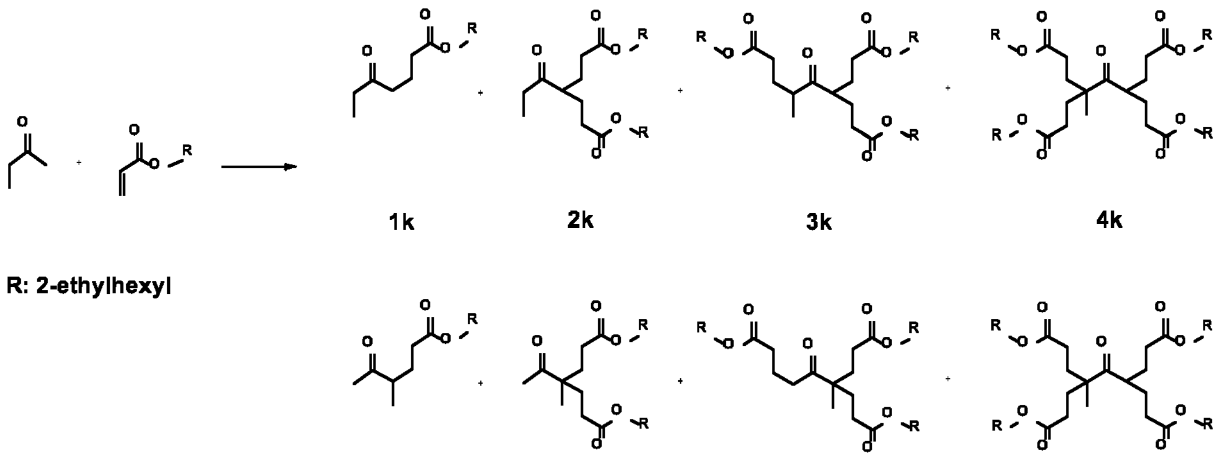

1k 2k 3k 4k

R: 2-ethylhexyl

5k 6k 7k 8k

Apparatur: Becherglastopfzelle
Anode: Graphit
Kathode: Graphit
Elektrolyt: 7,0 g Ethylmethylketon (10,0 Gew%)
17,9 g 2-Ethylhexylacrylat (25,6 Gew%)
43,0 g Acetonitril (61,4 Gew%)
2,1 g Methyltributylammoniummethylsulfat (3,0 Gew%)
Stromdichte: 20 mA/cm$^2$
Temperatur: 40 °C
Elektrolyse mit 0,25 F/mol Cyclohexanon

Die Umsetzung und Aufarbeitung erfolgte analog obigen Beispielen.

Basierend auf GC und GC-MS Analysen der rohen Reaktionsmischung wurde folgende Selektivität für die Bildung der einzelnen Komponenten bestimmt: 20,3 % für die Gesamtmenge der Verbindungen 1k und 5k und 12,5%

für die Gesamtmenge der Verbindungen 2k und 6k.

Untersuchung der Weichmacher

| Produkteigenschaft | Einheit | Methode |
|---|---|---|
| Dichte, 20°C | $g/cm^3$ | DIN 51757 Verf.3, 01/11 |
| Viskosität, 20°C | mPa * s | ASTM D7042-14 |
| Brechzahl, $n_D^{20}$ | | DIN 51423 02/10 |
| Wassergehalt | Gew.% | DIN 51777-1 03/83 |
| Säurezahl | mg KOH/g | DIN EN ISO 2114 06/02 |

1. Bestimmung der Dichte

Die Bestimmung der Dichte erfolgte nach DIN 51757, Januar 2011, Verfahren 3 mit Hilfe eines Stabinger Viskosimeters der Firma Anton-Paar bei 20 °C.

2. Bestimmung der Viskosität

Die Bestimmung der dynamischen Viskosität erfolgte bei 20 °C nach der ASTM D7042-14 mit Hilfe eines Stabinger Viskosimeters der Firma Anton-Paar.

3. Bestimmung des Brechungsindex

Die Bestimmung des Brechungsindex erfolgte nach DIN 51423, Februar 2010

4. Bestimmung des Wassergehaltes

Die Bestimmung des Wassergehaltes nach Karl-Fischer erfolgte nach DIN 51777, Teil 1, März 1983.

5. Bestimmung der Säurezahl

Die Bestimmung der Säurezahl erfolgte nach DIN EN ISO 2114:2002-06, Juni 2002.

| | Dichte | Viskosität | Brechzahl | Wassergehalt | Säurezahl |
|---|---|---|---|---|---|
| 1a: 94,9 %, 5a: 2,1 %, 6a: 3,0% (i) | 0,9688 | 20,4 | 1,4635 | 0,029 | 0,42 |
| 1a: 24,4 %, 2a: 39,4 %, 3a: 35,3 %, 6a: 0,9% (ii) | 0,9966 | 577,8 | 1,4748 | 0,0037 | 2,75 |
| 1a: 21,4 %, 2a: 40,7 %, 3a: 28,2 %, 6a: 9,7% (iii) | 0,9816 | 169,6 | 1,4680 | 0,028 | n. b. |
| 1a: 0%, 2a: 50,7 %, 3a: 48,3 %, 6a: 1,0% (iv) | 1,0061 | 492 | 1,4733 | 0,0198 | 299 |
| 1c: 39,6 %, 2c: 47,9 %, 6c: 12,5% (v) | 0,9621 | 134,3 | 1,4680 | 0,017 | n. b. |
| 1d: 48,6 %, 2d: 34,4 %, 6d: 17% (vi) | 0,9676 | 87,7 | 1,4675 | 0,019 | 0,61 |
| Hexamoll DINCH* | 0,9478 | 50 | 1,4621 | 0,014 | 0,012 |
| *: Vergleichsbeispiel, nicht erfinderisch Prozentangaben in GC-Flächenprozent auf 100 normiert.<br>n.b.: Nicht bestimmt<br>Die Viskosität ist in Fig 1 dargestellt | | | | | |

Messungen an Plastisolen

1. Bestimmung der Lösetemperatur an PVC-Plastisolen mit den erfindungsgemäßen Weichmachern

Zur Untersuchung des Gelierverhaltens von PVC-Plastisolen wurden PVC-Plastisole nach folgender Rezeptur hergestellt:

Tabelle 1:

| | Plastisol # | | | | | | |
|---|---|---|---|---|---|---|---|
| | 1 | 2 | 3 | 4 | 5 | 6 | 7* |
| Vinoflex S7114, Siebfraktion<100µm | 5 | 5 | 5 | 5 | 5 | 5 | 5 |
| Reagens SLX/781 | 0,1 | 0,1 | 0,1 | 0,1 | 0,1 | 0,1 | 0,1 |
| (i) | 95 | | | | | | |
| (ii) | | 95 | | | | | |
| (iii) | | | 95 | | | | |
| (iv) | | | | 95 | | | |
| (v) | | | | | 95 | | |
| (vi) | | | | | | 95 | |
| Hexamoll DINCH* | | | | | | | 95 |
| Lösetemperatur | 81 | 121 | 128 | 137 | 130 | 116 | 140 |
| *Nicht erfindungsgemäß | | | | | | | |

Die Herstellung der Plastisole erfolgte in der Weise, dass das PVC in einem PE(Polyethylen)-Becher eingewogen wurde. Die flüssigen Komponenten wurden in einer Metallschale eingewogen. Danach wurde das PVC ebenfalls in die Metallschale überführt. Mit einem Spatel wurde vorhomogenisiert. Das entstandene Plastisol wurde in einen PE-Becher überführt. Mit Hilfe eines Rührers mit Dissolverscheibe (Fa. Jahnke & Kunkel, IKA-Werk, Typ RE-166 A, 60-6000 1/min, Durchmesser der Dissolverscheibe = 40 mm) wurde bei 2500 1/min 150 s homogenisiert. Das Plastisol wurde aus dem PE-Becher in eine Stahlschale überführt und diese in einem Exsikkator unter Vakuum gesetzt. Nach dem Entweichen der Hauptmenge der im Plastisol eingeschlossenen Luft wird das Plastisol noch 15 min in dem Exsikkator bei ca. 20 mbar Vakuum belassen. Das Entweichen der im Plastisol eingeschlossenen Luft ist durch Blasenbildung an der Oberfläche des Plastisols erkennbar. Sobald keine weitere oder nur eine sehr reduzierte Blasenbildung erfolgt, ist die Hauptmenge der Luft aus dem Plastisol entwichen. Danach wird die Vakuumpumpe abgeschaltet, der Exsikkator belüftet und das Plastisol wieder in den PE-Becher überführt.

Das so hergestellte Plastisol wurde 30 min nach der Homogenisierung zur Messung der Gelierfähigkeit verwendet.
Die Viskositätsmessungen wurden mit einem beheizbaren Oszillations- und Rotations-Rheometer MCR 302 von Anton Paar in einem Rotationsversuch durchgeführt.

| | |
|---|---|
| Messsystem: | Platte/Platte d=50 mm |
| Scherrate: | 10 s-1 |
| Spaltbreite: | 0,25 mm |
| Ausgangstemperatur: | 30 °C |
| Temperaturprofil: | 30 - 180 °C |
| Temperatursteigerung: | 5 °C/min |
| Messpunkte: | 600 |
| Messpunktdauer: | 3 Sek |

Die Messung erfolgte in zwei Schritten. Der erste Schritt dient zum Temperieren der Probe bei konstanten 30 °C. Bei 30 °C wird das Plastisol für 2 min mit einer Scherrate von 10 s-1 geschert. Anschließend startet das Temperaturprogramm. Bei der Messung wird die Viskosität über die Temperatur aufgezeichnet. Die Temperatur bei der das

Viskositätsmaximum erreicht ist, wird als die Geliertemperatur des Plastisols betrachtet.

Die Lösetemperatur ist in Fig 2 dargestellt

MESSUNGEN AN PRESSFOLIEN

1. Herstellung der Weich-PVC-Pressfolien

Nachfolgende Rezeptor wurde verwendet.

| Additiv | phr |
|---|---|
| PVC (Homopolymeres Suspensions-PVC, Markenname Inovyn® PVC 271 PC) | 100 |
| Weichmacher | 60 |
| Ba-Zn Stabilisator, Typ Reagens SLX/781 | 2 |

Die Komponenten wurden mit einem Handmixer bei Raumtemperatur vermischt. Die Mischung wurde anschließend auf einem ölbeheizten Labormischwalzwerk (Fa. Collin, Automatikwalzwerk Typ W 250 M x 400, Durchmesser: 252 mm, Breite: 450 mm) plastifiziert und zu einem Walzfell verarbeitet. Die Temperatur der beiden Walzen betrug wie in der Tabelle 2 angegeben; die Drehzahlen lagen bei 15 Umdrehungen/min. (vordere Walze) und 12 Umdrehungen/min. (hintere Walze); die Walzzeit betrug 5 Minuten.

Man erhielt ein Walzfell mit einer Dicke von ca. 0,53 mm. Das abgekühlte Walzfell wurde anschließend bei einer Temperatur von 10 °C höher als die Walztemperatur und einem Druck von 150 bar innerhalb 180 s auf einer Presse vom Typ "Laborplattenpresse 400 P" der Fa. Collin zu einer Weich-PVC-Folie mit einer Dicke von 0,50 mm verpresst.

Tabelle 2:

| | Walzfolie # | | | | | | | | |
|---|---|---|---|---|---|---|---|---|---|
| | 1 | 2 | 3 | 4 | 5 | 6 | 7* | 8* | 9* |
| Inovyn® PVC 271 PC | 100 | 100 | 100 | 100 | 100 | 100 | 100 | 100 | 100 |
| Reagens SLX/781 | 2 | 2 | 2 | 2 | 2 | 2 | 2 | 2 | 2 |
| (i) | 60 | | | | | | | | |
| (ii) | | 60 | | | | | | | |
| (iii) | | | 60 | | | | | | |
| (iv) | | | | 60 | | | | | |
| (v) | | | | | 60 | | | | |
| (vi) | | | | | | 60 | | | |
| Hexamoll DINCH* | | | | | | | 50 | 60 | 70 |
| Walztemperatur | 160 | 170 | 165 | 175 | 170 | 170 | 180 | 180 | 175 |
| *Nicht erfindungsgemäß | | | | | | | | | |

2. Bestimmung der Folienflüchtigkeit von Folien mit den erfindungsgemäßen Weichmachern

Die Folienflüchtigkeit ist ein Maß für die Flüchtigkeit eines Weichmachers im fertigen weichgemachten PVC-Artikel. Für die Prüfung der Folienflüchtigkeit wurden Folien hergestellt wie unter (1) beschrieben. An den so erhaltenen 0,5 mm dicken Folien wurde die Prüfung der Folienflüchtigkeit durchgeführt.

Prüfung der Folienflüchtigkeit über 24h bei 130°C:

Für die Bestimmung der Folienflüchtigkeit werden aus den nach (1) hergestellten Folien vier Einzelfolien (150 x 100 mm) ausgeschnitten, gelocht und gewogen. Die Folien werden an einen rotierenden Stern in einen auf 130°C

eingestellten Heraeus Trockenschrank Typ 5042 E gehängt. In dem Schrank wird 18-mal pro Stunde die Luft gewechselt. Dies entspricht 800l/h Frischluft. Nach 24 h in dem Schrank werden die Folien entnommen und nach dem Abkühlen zurückgewogen. Der Gewichtsverlust in Prozent gibt die Folienflüchtigkeit der Weichmacher-Zusammensetzungen an.
Die Folienflüchtigkeit ist in Fig. 3 dargestellt

3. Bestimmung der Shore A-Härte von Folien mit den erfindungsgemäßen Weichmachern

Die Shore A-Härte ist ein Maß für die Elastizität von weichgemachten PVC-Artikeln. Je niedriger die Shore-Härte, desto höher die Elastizität der PVC-Artikel. Für die Bestimmung der Shore A Härte wurden wie unter (1) beschrieben 49 x 49 mm große Folienstücke aus dem Walzfell ausgestanzt. Insgesamt wurden so ca. 27 Stück Folien ausgestanzt, im Pressrahmen übereinandergelegt, bei 10 °C höherer Temperatur als zur Herstellung des Walzfells verwendet wurde und zu einem 50 x 50 x 10 mm dicken Shore-Klotz gepresst.

Beschreibung der Shore-Härte Messung:

Methode: DIN EN ISO 868, Okt. 2003
Gerät: Fa. Hildebrand- Digital Durometer Modell DD-3
Lagerzeit vor Messung: 7 d im Klimaraum bei 23 °C und 50 % rel. Feuchte
Messzeit (Dauer der Nadel auf dem Probekörper bis zum Ablesen des Wertes) 15 s
Es werden 10 Einzelwerte gemessen und daraus der arithmetische Mittelwert berechnet.
Die Shore A-Härte ist in Fig. 4 dargestellt

4. Bestimmung der Verträglichkeit (Permanenz) von Folien mit den erfindungsgemäßen Weichmachern

Die Verträglichkeit (Permanenz) von Weichmachern in weichgemachten PVC-Artikeln charakterisiert, in welchem Ausmaß Weichmacher während des Gebrauchs der weichgemachten PVC-Artikel zum Ausschwitzen neigen und dadurch die Gebrauchseigenschaften des PVC-Artikels beeinträchtigen. Für die Prüfung der Verträglichkeit wurden Pressfolien hergestellt wie unter (1) beschrieben. An den so erhaltenen 0,5 mm dicken Folien wurde die Prüfung des Verträglichkeitsverhaltens durchgeführt.

Prüfmethode:

Zweck des Prüfverfahrens

Die Prüfung dient zur qualitativen und quantitativen Messung der Verträglichkeit von Weich-PVC-Rezepturen. Sie wird bei erhöhter Temperatur (70 °C) und Luftfeuchte (100 % rel. h) durchgeführt. Die erhaltenen Daten werden gegen die Lagerzeit ausgewertet.

Probekörper

Zur Standardprüfung werden je Rezeptur 10 Prüfkörper (Pressfolien) mit einer Größe von 75 x 110 x 0,5 mm verwendet. Die Folien werden an der Breitseite gelocht, beschriftet und gewogen. Die Beschriftung muss wischfest sein und kann z. B. mit dem Lötkolben erfolgen.

Prüfgeräte

Heraeus-Umlufttrockenschrank bei 70 °C, Analysenwaage, Temperaturmessgerät mit Fühler zur Messung der Innenraumtemperatur des Wärmeschrankes, Becken aus Glas, Metallgestelle aus nichtrostendem Material;
Prüftemperatur: 70 °C
Prüfmedium: entstehender Wasserdampf bei 70 °C aus vollentsalztem Wasser

Durchführung:

Die Temperatur im Innenraum des Wärmeschrankes wird auf 70 °C eingestellt. Die Prüffolien werden auf ein Drahtgestell aufgehängt und in eine Glaswanne, die etwa 5 cm hoch mit Wasser (VE-Wasser) gefüllt ist, hineingestellt. Es dürfen nur Folien gleicher Zusammensetzung in einem gekennzeichneten Becken gelagert werden, um Beeinflussung zu vermeiden und die Entnahme nach den jeweiligen Lagerzeiten zu erleichtern. Zu beachten ist, dass die Folien sich gegenseitig nicht berühren. Die Unterkanten der Folien dürfen nicht ins Wasser hängen. Der Wasserstand in den Glasbecken wird regelmäßig kontrolliert und evtl. fehlendes Wasser wird ersetzt.

Die Glaswanne wird mit einer PE-Folie wasserdampfdicht verschlossen, damit der später in der Glaswanne entstehende Wasserdampf nicht entweichen kann.

Lagerzeit

Im 1-, 3-, 7-, 14- und 28-Tage-Rhythmus werden jeweils 2 Folien (Doppelbestimmung) aus der Glaswanne entnommen und für 1 Std. frei hängend an der Luft klimatisiert. Danach wird die Folie optisch und haptisch beurteilt und anschließend mit Methanol gereinigt (mit Methanol angefeuchtetes Handtuch). Anschließend wird die Folie für 16 h bei 70 °C in einem Trockenschrank (natürliche Konvektion) frei hängend getrocknet. Nach Entnahme aus dem Trockenschrank wird die Folie für 1 Std. im Labor frei hängend konditioniert und gewogen (Trockenwert). Als Prüfergebnis angegeben wird jeweils der arithmetische Mittelwert der Gewichtsänderung aus ursprünglichem Foliengewicht und dem Trockenwert.

Die Verträglichkeit ist in Fig. 5 dargestellt

5. Bestimmung der mechanischen Werte von Folien, enthaltend erfindungsgemäße Weichmacher

Die mechanischen Eigenschaften von weichgemachten PVC-Artikeln werden beispielsweise mit Hilfe der Parameter Bruchdehnung, Bruchspannung und des 100 % Moduls charakterisiert. Je höher der Wert der Bruchdehnung, desto besser die mechanischen Eigenschaften des weichgemachten PVC-Artikels. Niedrigere Werte für Bruchspannung und 100 % Modul weisen auf eine effizientere Wirkung des Weichmachers hin. Für die Prüfung der mechanischen Werte wurden Pressfolien hergestellt, wie unter (1) beschrieben. An den so erhaltenen ca. 0,5 mm dicken Folien wurde die Prüfung der mechanischen Eigenschaften durchgeführt.

Die Parameter Bruchdehnung, Bruchspannung und 100 % Modul werden nach DIN EN ISO 527, Teil 1 u. 3, bestimmt. Im Einzelnen wird wie folgt vorgegangen.

Maschine: Zwick Typ TMZ2.5/TH1S
Methode: Prüfung nach DIN EN ISO 527 Teil 1 und Teil 3
Probekörper: Folienstreifen Typ 2 nach DIN EN ISO 527 Teil 3, 150 mm lang, 15 mm breit, ausgestanzt
Anzahl Probekörper: Pro Prüfung werden 10 Proben gerissen
Klima: Normklima 23 °C (+- 1°C), 50 % relative Luftfeuchtigkeit
Lagerzeit der Probekörper vor der Messung: 7 Tage im Normklima
Klemmen: Glatt-Konvex mit 6 bar Klemmendruck
Einspannlänge: 100 mm
Messlänge (= Einspannlänge): 100 mm
Prüfgeschwindigkeit: 100 mm/min

Die Bruchdehnung, Bruchspannung und 100% Modul sind in Fig. 6 dargestellt

6. Bestimmung der Glasübergangstemperatur nach ISO 6721-7, Juni 1996

Die Messung der Glasübergangstemperatur nach ISO 6721-7 erfolgt in einem Gerät Rheometrics RDA 2 der Firma TA Instruments. Ein streifenförmiger Prüfkörper (Rechteckform), hergestellt aus einer Preßfolie nach (1), wird vertikal an seinen Enden fest eingespannt und durch einen an der unteren Halterung angekoppelten Motor sinusförmig auf Torsion beansprucht. Dies geschieht mit einer Frequenz von 1 Hz und einem Strain von 0,2 %. Eine am oberen Streifenhalter angebrachte Kraftmessdose registriert das resultierende Drehmoment. Aus Drehmoment, Verdrehwinkel, der Phasenverschiebung zwischen beiden, und den geometrischen Dimensionen lassen sich Schubmodul (G') und Verlustfaktor (G") bestimmen.

Die Messungen werden in einem Temperaturbereich von -80°C bis +20°C unter schrittweißer Aufheizung der Probe durchgeführt. Als Resultat wird das komplexe Schubmodul in Abhängigkeit der Temperatur gemessen. Die Messungen erfolgen nach ISO 6721-7.

Glasübergänge lassen sich als Maxima in G" bestimmen. Darüber hinaus dienen diese Messungen der Charakterisierung des Dämpfungs- und Erweichungsverhaltens in Abhängigkeit der Temperatur

Test Bedingungen:

Norm ISO 6721-7

(fortgesetzt)

| | |
|---|---|
| Temperaturstufen | $\Delta T = 2$ K |
| Temperatur | -80 °C bis 20 °C (unter Stickstoff) |
| Frequenz | 1 Hz |
| anfängl. Strain | 0,2 % |
| Geometrie | 40 mmx 10 mm x 0,5 mm (aus Folie gestanzt) |

Die Glasübergangstemperatur ist in Fig. 7 dargestellt

**Patentansprüche**

**1.** Verfahren zur elektrochemischen Herstellung einer Verbindung der allgemeinen Formel (I)

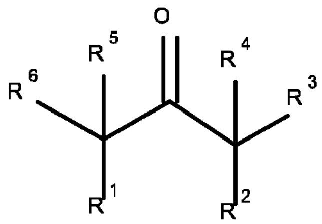

(I)

wobei

$R^1$ und $R^2$ unabhängig voneinander H oder $C_1$- bis $C_5$-Alkyl sind,
oder
$R^1$ und $R^2$ eine $C_2$- bis $C_9$-Alkandiylgruppe sind,
$R^3$ H, $CH_3$ oder eine *-$CH_2$-$CH_2$-C(=O)-O-$R^{3'}$ Gruppe ist und $R^{3'}$ $C_1$- bis $C_{13}$-Alkyl ist,
$R^4$ H oder eine *-$CH_2$-$CH_2$-C(=O)-O-$R^{4'}$ Gruppe ist und $R^{4'}$ $C_1$- bis $C_{13}$-Alkyl ist,
$R^5$ H, $CH_3$ oder eine *-$CH_2$-$CH_2$-C(=O)-O-$R^{5'}$ Gruppe ist und $R^{5'}$ $C_1$- bis $C_{13}$-Alkyl ist,
$R^6$ H oder eine *-$CH_2$-$CH_2$-C(=O)-O-$R^{6'}$ Gruppe ist und $R^{6'}$ $C_1$- bis $C_{13}$-Alkyl ist,
$R^3$, $R^4$, $R^5$ und $R^6$ soweit voneinander unabhängig sind, dass $R^3$, $R^4$, $R^5$ und $R^6$ nicht gleichzeitig H sind, $R^3$ und $R^5$ nicht gleichzeitig $CH_3$ und $R^4$ und $R^6$ H sind, $R^3$ nicht $CH_3$ und gleichzeitig $R^4$, $R^5$, $R^6$ H sind, $R^5$ nicht $CH_3$ und gleichzeitig $R^3$, $R^4$, $R^6$ H sind,
* den Verknüpfungspunkt mit den $\alpha$-KoNenstoffatomen der Carbonylgruppe darstellt,

umfassend die Kupplung einer Verbindung der allgemeinen Formel (II)

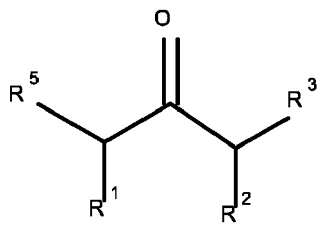

(II)

wobei $R^1$ und $R^2$ unabhängig voneinander H oder $C_1$- bis $C_5$-Alkyl sind,
oder
$R^1$ und $R^2$ eine $C_2$- bis $C_9$-Alkandiylgruppe sind
und $R^3$ und $R^5$ unabhängig voneinander H oder $CH_3$ sind,

mit einer Verbindung der allgemeinen Formel (III) wobei die Verbindung der allgemeinen Formel (III) ausgewählt ist aus der Gruppe bestehend aus Verbindungen der allgemeinen Formel (IIIa), (IIIb), (IIIc), (IIId) oder einer beliebigen Mischung aus zwei oder mehr der zuvor genannten Verbindungen

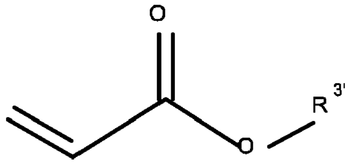

IIIa

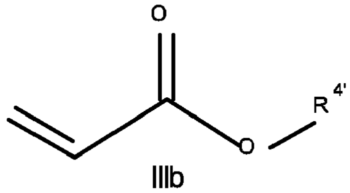

IIIb

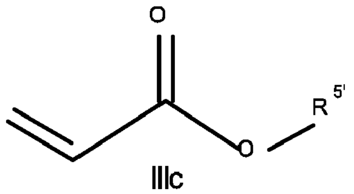

IIIc

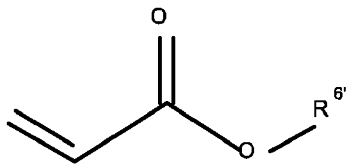

IIId

in einer ungeteilten Elektrolysezelle,
in Gegenwart eines polaren Lösungsmittels und eines Leitsalzes,
wobei das Molverhältnis zwischen Verbindungen der allgemeinen Formel (II) und der Summe der Verbindungen der allgemeinen Formel (III) 1:1 bis 1:10 beträgt.

**2.** Verfahren nach Anspruch 1, wobei die Stromdichte 1 bis 150 mA/cm$^2$ beträgt.

**3.** Verfahren nach einem der Ansprüche 1 oder 2, wobei das Anodenmaterial $IrO_2$, $PbO_2$, $RuO_2$, Eisenoxid, Stahl oder Kohlenstoff und das Kathodenmaterial Blei, Aluminium, Kupfer, Titan, Cadmium, Silber, Stahl, Edelstahl, Hastelloy-C (Ni - Mo - Fe oder Ni - Mo - Cr), Platin, Palladium, Nickel oder Kohlenstoff enthält.

**4.** Verfahren nach Anspruch 3, wobei das Anodenmaterial und das Kathodenmaterial Kohlenstoff enthalten.

**5.** Verfahren nach einem der Ansprüche 1 oder 2, wobei als Anoden und Kathoden Graphitelektroden eingesetzt werden oder wobei als Anoden und Kathoden Gasdiffusionsschichtelektroden eingesetzt werden.

**6.** Verfahren nach einem der vorangegangenen Ansprüche, wobei es sich bei dem polaren Lösungsmittel um ein polar aprotisches Lösungsmittel handelt.

**7.** Verfahren nach einem der vorangegangenen Ansprüche, wobei es sich bei dem Leitsalz um ein quartäres Ammoniumsalz, ein quartäres Phosphoniumsalz, ein bis-quartäres Ammonium- oder Phosphoniumsalz, eine ionische Flüssigkeit oder um eine Mischung von zwei oder mehr der genannten Leitsalze handelt.

**8.** Verfahren nach einem der vorangegangenen Ansprüche wobei es sich bei der ungeteilten Zelle um eine Topfzelle, Plattenstapelzelle oder Plattenrahmenzelle handelt.

**9.** Verfahren nach einem der vorangegangenen Ansprüche, wobei es sich bei einer Verbindung der allgemeinen Formel (II) um Cyclopentanon oder Cyclohexanon handelt.

**10.** Verfahren nach einem der vorangegangenen Ansprüche, wobei $R^{3'}$, $R^{4'}$, $R^{5'}$ und $R^{6'}$ in Verbindungen der allgemeinen Formel (III) gleich und $C_1$- bis $C_{13}$-Alkyl sind.

**11.** Verfahren nach Anspruch 10, wobei $R^{3'}$, $R^{4'}$, $R^{5'}$ und $R^{6'}$ in Verbindungen der allgemeinen Formel (III) gleich und Methyl, Ethyl, n-Propyl, Isopropyl, n-Butyl, Isobutyl, 2-Ethylhexyl, n-Nonyl, Isononyl, 2-Propylheptyl oder Isodecyl sind.

**12.** Verfahren nach einem der vorangegangenen Ansprüche, wobei die Aufarbeitung des Reaktionsgemisches eine oder mehrere Destillationen- und/oder Extraktionen umfasst und Destillationen- und Extraktionen in beliebiger Reihenfolge erfolgen können.

**13.** Mischung von Verbindungen der allgemeinen Formel (I) wie sie durch das erfindungsgemäße Verfahren nach einem der Ansprüche 1 bis 12 erhalten wird.

**14.** Mischung von Verbindungen der allgemeinen Formel (I), enthaltend:

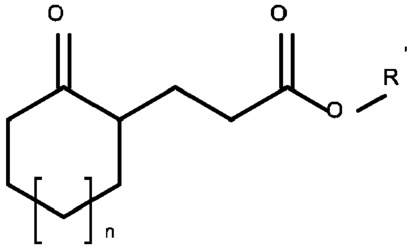

(Ia)

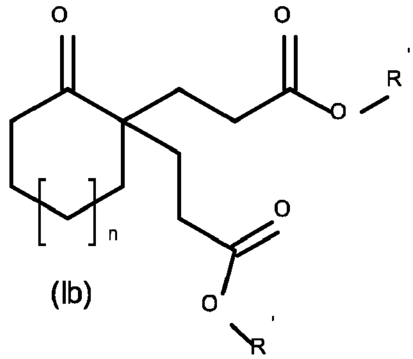

(Ib)

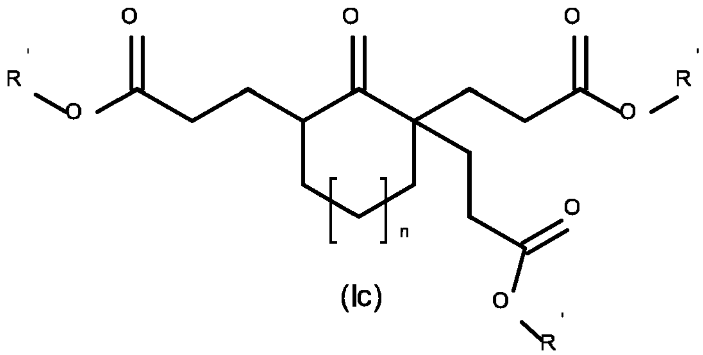

(Ic)

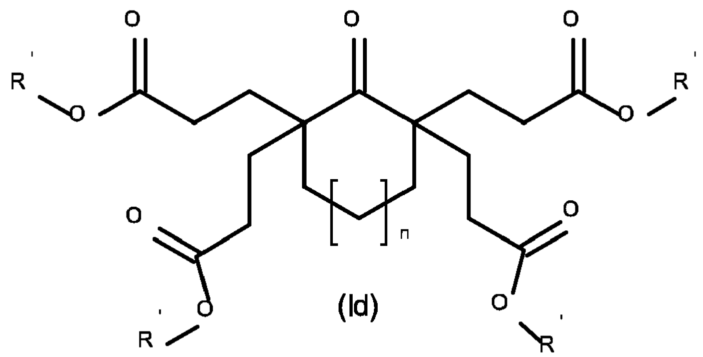

(Id)

wobei

R’ für $C_8$- bis $C_{10}$-Alkyl steht,
n für alle Verbindungen in der Mischung 0 oder 1 ist,
Verbindung (Ia) mit 0 bis 40 Gewichtsprozent enthalten ist,
Verbindung (Ib) mit 0 bis 60 Gewichtsprozent enthalten ist,
Verbindung (Ic) mit 0 bis 60 Gewichtsprozent enthalten ist,
Verbindung (Id) mit 0 bis 75 Gewichtsprozent enthalten ist,

wobei sich die Gewichtsprozentangaben der Verbindungen (Ia), (Ib), (Ic), (Id) in Summe zu 100 Prozent addieren und sich die Gewichtsprozentangaben auf die Gesamtmenge der in der Mischung enthaltenen Verbindungen der allgemeinen Formel (Ia), (Ib), (Ic) und (Id) beziehen.

**15.** Verwendung einer Mischung nach Anspruch 13 als Weichmacher für Kunststoffe oder als Weichmacher in Plastisolen.

**16.** Verwendung einer Mischung nach Anspruch 14 als Weichmacher für Kunststoffe oder als Weichmacher in Plastisolen.

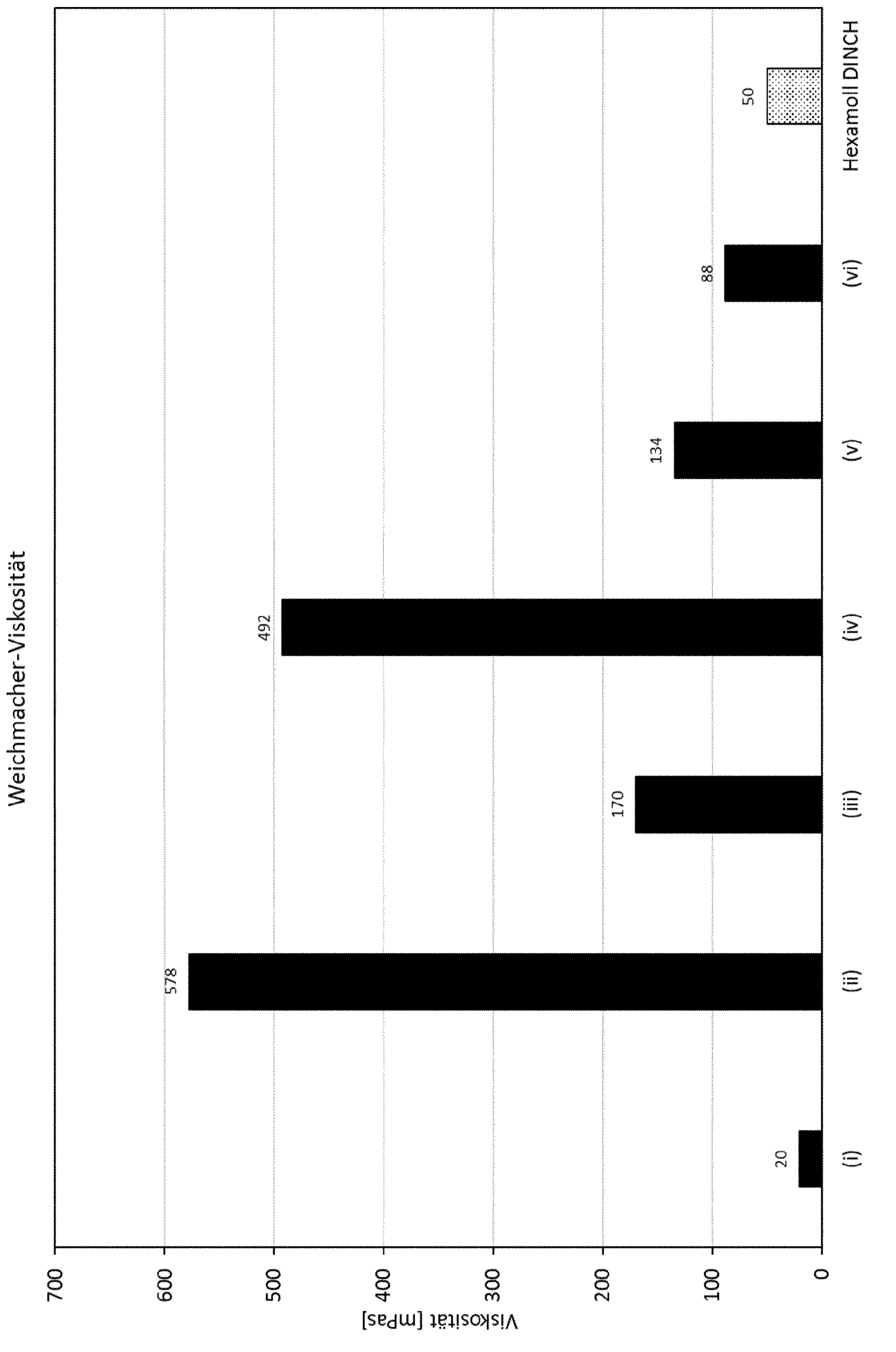
Weichmacher-Viskosität
Viskosität [mPas]
0
100
200
300
400
500
600
700
20
578
170
492
134
88
50
(i)
(ii)
(iii)
(iv)
(v)
(vi)
Hexamoll DINCH

Fig. 1

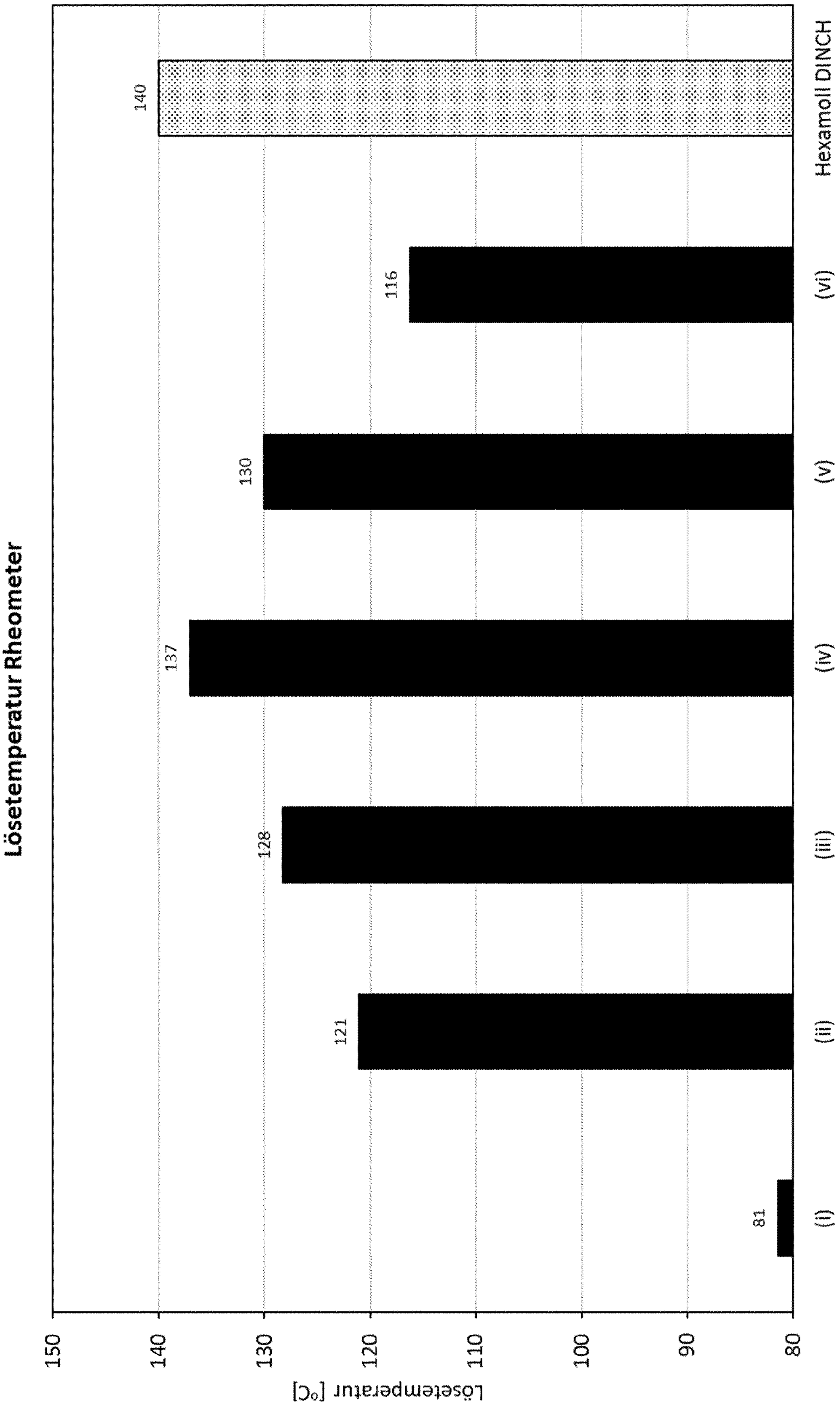
Lösetemperatur Rheometer
Lösetemperatur [°C]
150
140
130
120
110
100
90
80
81
121
128
137
130
116
140
(i)
(ii)
(iii)
(iv)
(v)
(vi)
Hexamoll DINCH

Fig. 2

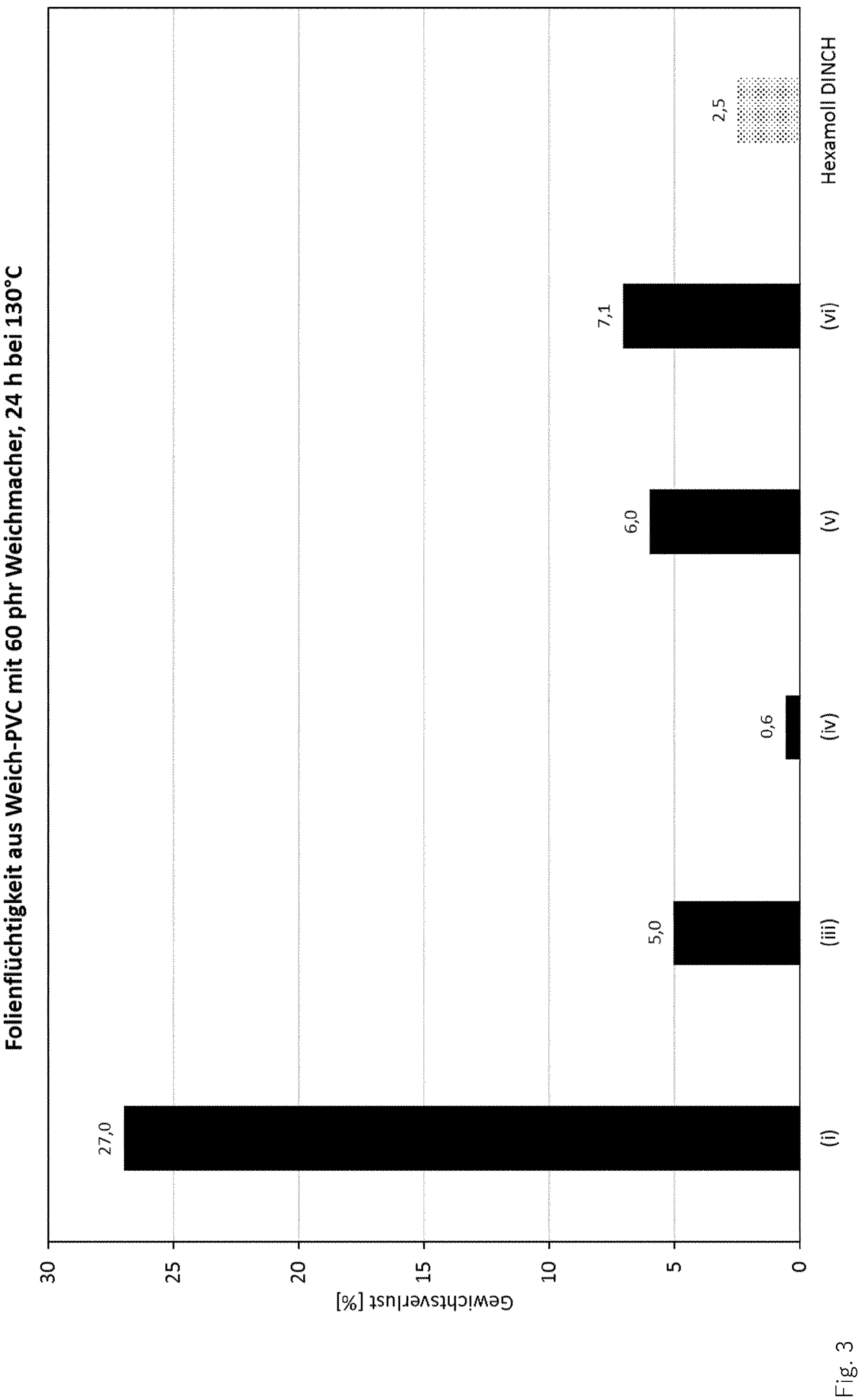
Folienflüchtigkeit aus Weich-PVC mit 60 phr Weichmacher, 24 h bei 130°C
Gewichtsverlust [%]
30
25
20
15
10
5
0
27,0
5,0
0,6
6,0
7,1
2,5
(i)
(iii)
(iv)
(v)
(vi)
Hexamoll DINCH

Fig. 3

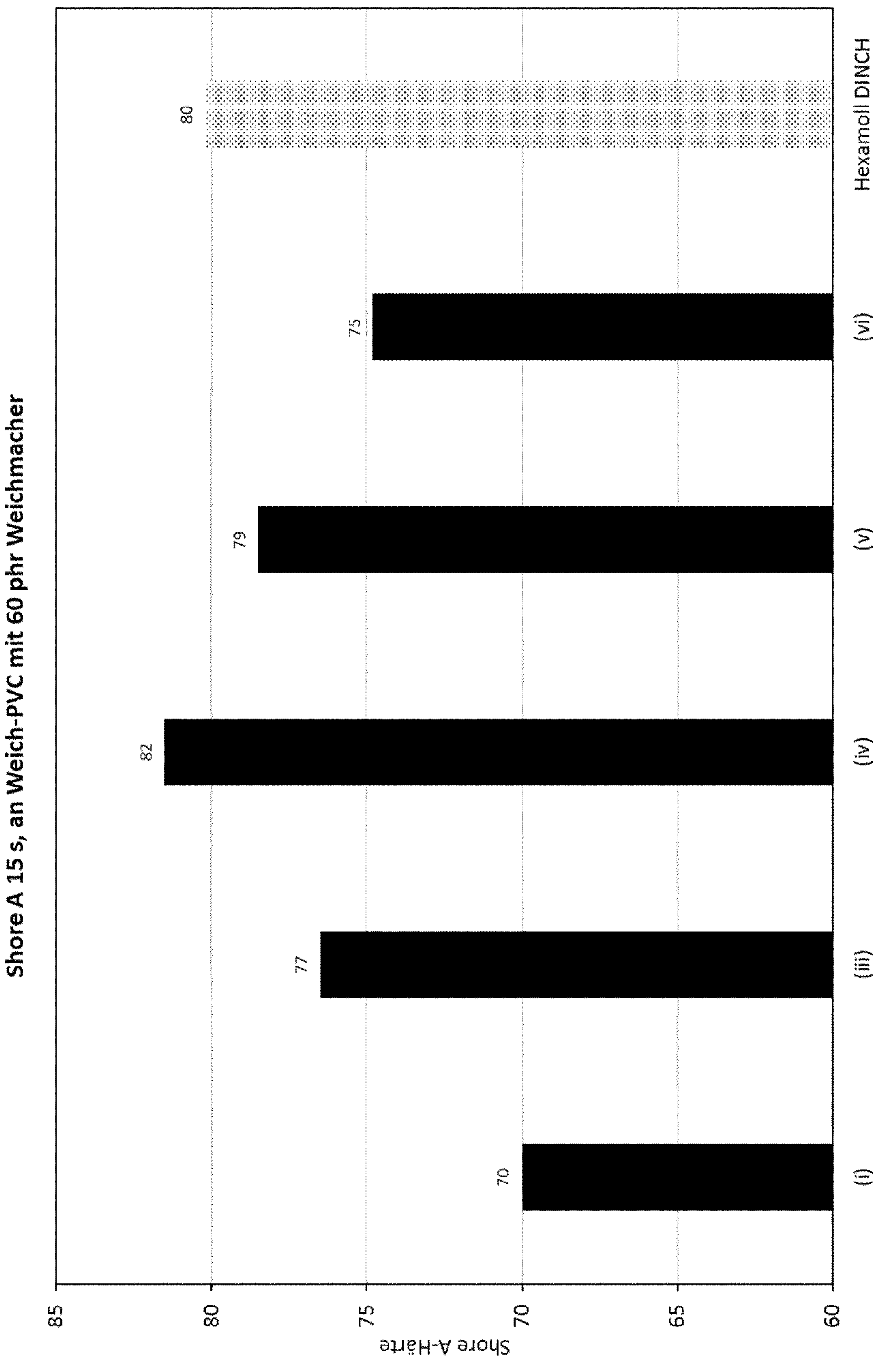
Shore A 15 s, an Weich-PVC mit 60 phr Weichmacher
Shore A-Härte
85
80
75
70
65
60
70
77
82
79
75
80
(i)
(iii)
(iv)
(v)
(vi)
Hexamoll DINCH

Fig. 4

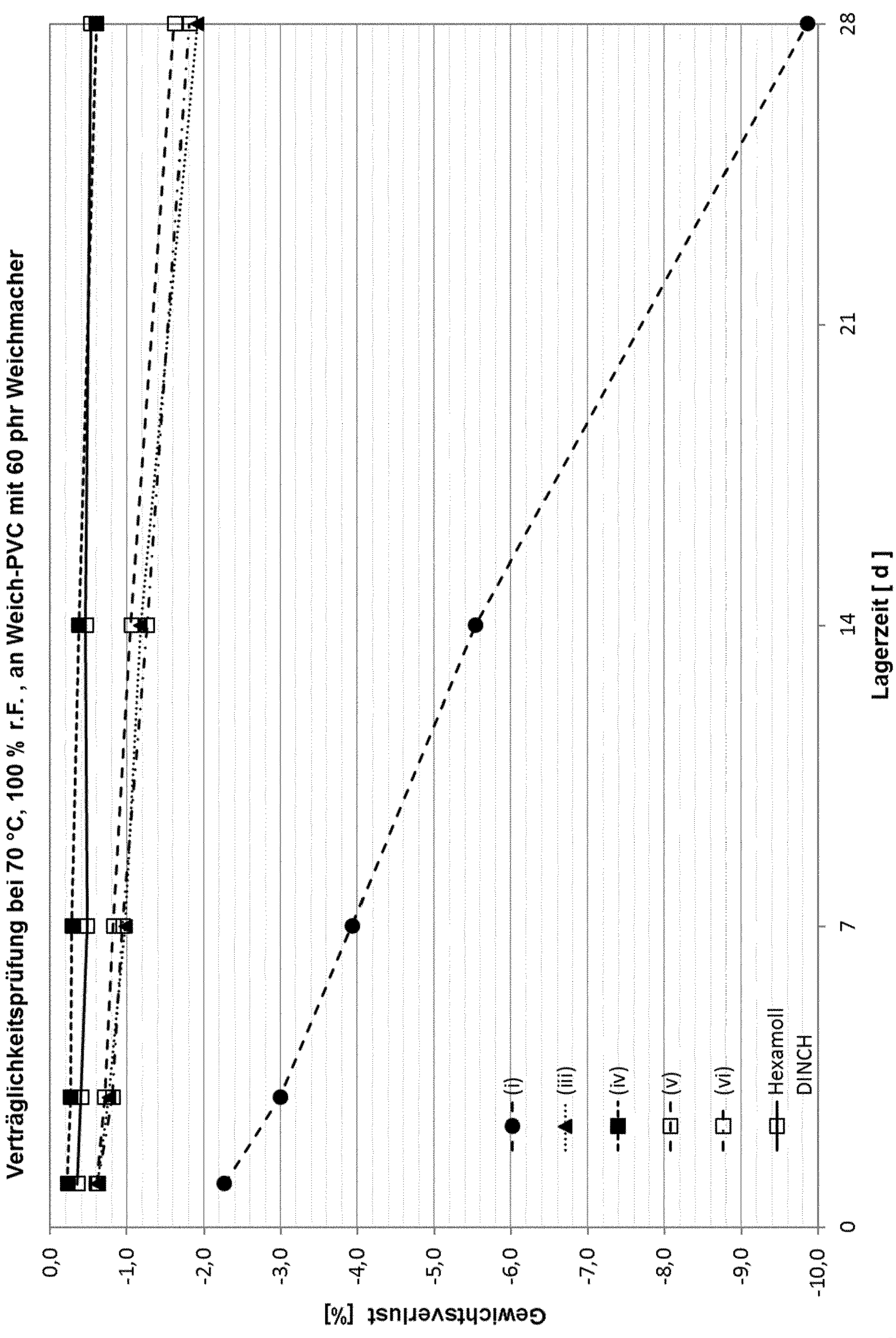

Verträglichkeitsprüfung bei 70 °C, 100 % r.F. , an Weich-PVC mit 60 phr Weichmacher
Gewichtsverlust [%]
0,0
-1,0
-2,0
-3,0
-4,0
-5,0
-6,0
-7,0
-8,0
-9,0
-10,0
0
7
14
21
28
Lagerzeit [ d ]
(i)
(iii)
(iv)
(v)
(vi)
Hexamoll
DINCH


Fig. 5

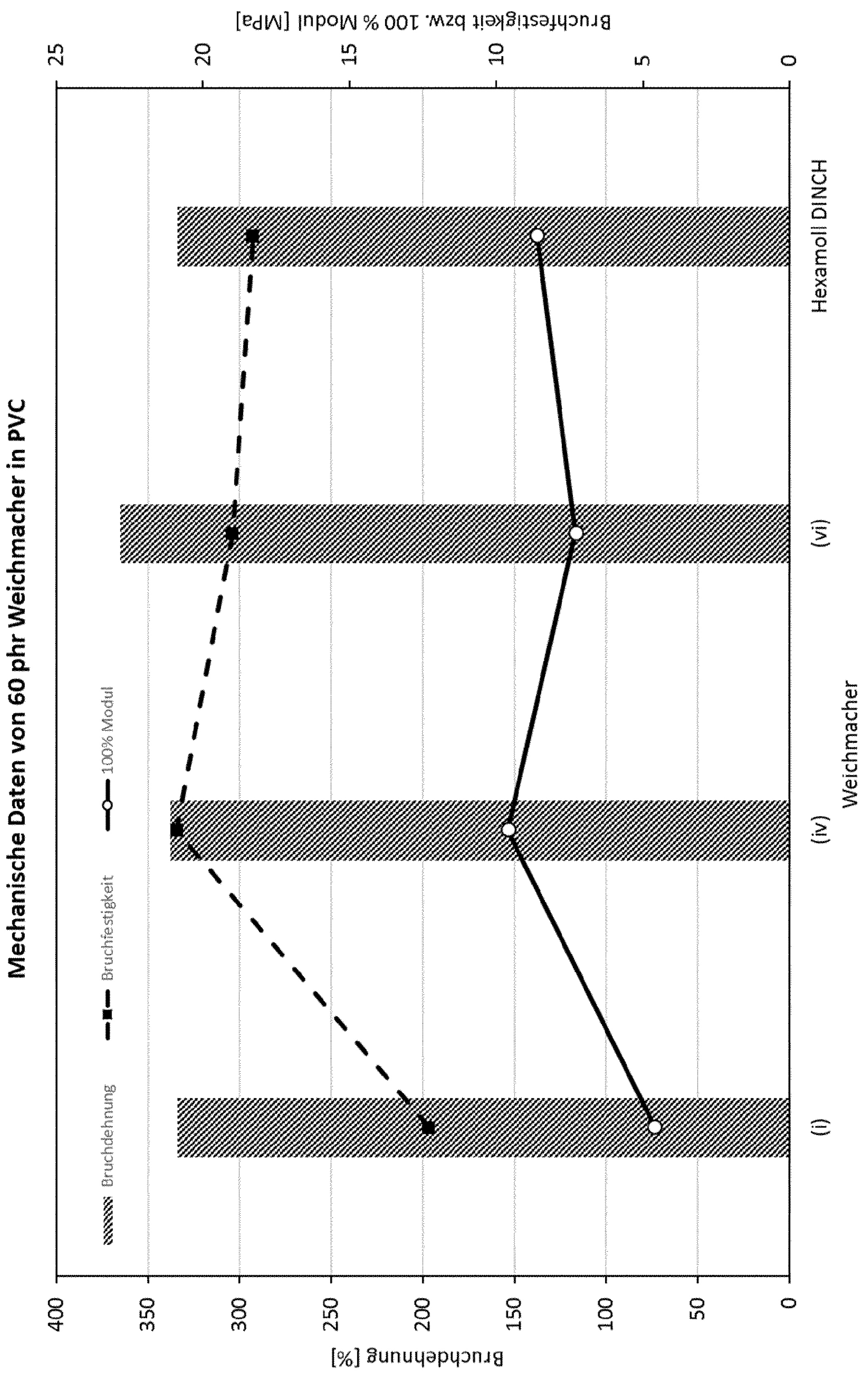
Mechanische Daten von 60 phr Weichmacher in PVC
Bruchdehnung
Bruchfestigkeit
100% Modul
Bruchdehnung [%]
400
350
300
250
200
150
100
50
0
Bruchfestigkeit bzw. 100 % Modul [MPa]
25
20
15
10
5
0
(i)
(iv)
(vi)
Hexamoll DINCH
Weichmacher

Fig. 6

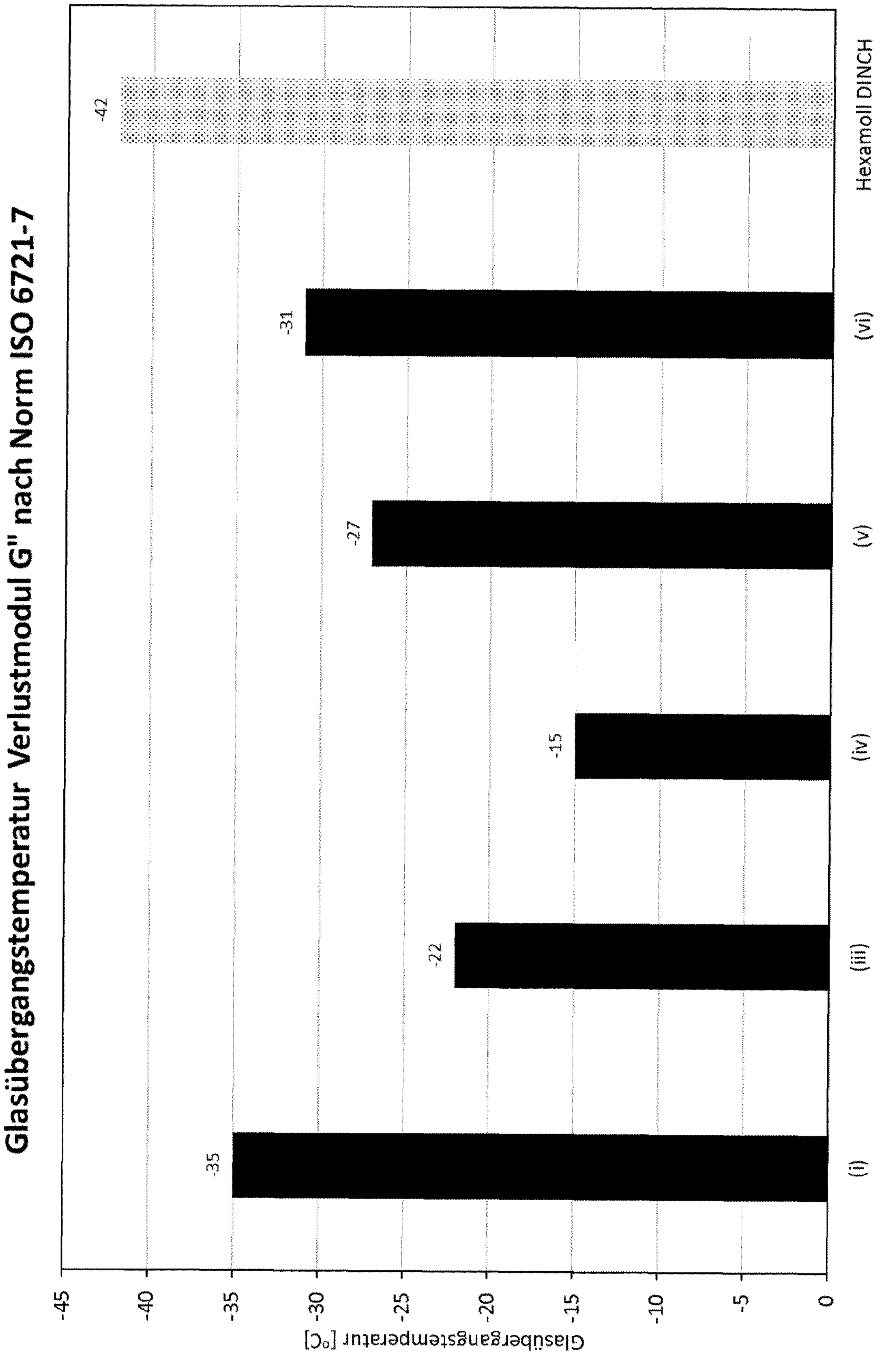
Glasübergangstemperatur Verlustmodul G'' nach Norm ISO 6721-7
Glasübergangstemperatur [°C]
-45
-40
-35
-30
-25
-20
-15
-10
-5
0
-35
-22
-15
-27
-31
-42
(i)
(iii)
(iv)
(v)
(vi)
Hexamoll DINCH

Fig. 7

Europäisches Patentamt
European Patent Office
Office européen des brevets

# EUROPÄISCHER RECHERCHENBERICHT

Nummer der Anmeldung
EP 20 17 6238

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | US 3 076 775 A (MASTERSON JAMES E ET AL) 5. Februar 1963 (1963-02-05)<br>* das ganze Dokument *<br>----- | 13-16 | INV.<br>C25B3/10<br>C08K5/00 |
| X,D | DATABASE WPI<br>Week 197522<br>Thomson Scientific, London, GB;<br>AN 1975-36474W<br>XP002796215,<br>& JP S49 85136 A (ADEKA ARGUS IND KK)<br>15. August 1974 (1974-08-15)<br>* Zusammenfassung *<br>----- | 13-16 | |
| A | DE 10 2010 029272 A1 (EVONIK DEGUSSA GMBH [DE]) 1. Dezember 2011 (2011-12-01)<br>* Ansprüche 1-5 *<br>----- | 1-12 | |

RECHERCHIERTE SACHGEBIETE (IPC)
C25B
C08K

Der vorliegende Recherchenbericht wurde für alle Patentansprüche erstellt

1

| Recherchenort | Abschlußdatum der Recherche | Prüfer |
|---|---|---|
| München | 6. Oktober 2020 | Hammerstein, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 20 17 6238

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-10-2020

| Im Recherchenbericht angeführtes Patentdokument | Datum der Veröffentlichung | Mitglied(er) der Patentfamilie | Datum der Veröffentlichung |
|---|---|---|---|
| US 3076775 A | 05-02-1963 | BE 603960 A | 20-11-1961 |
| | | GB 984600 A | 24-02-1965 |
| | | NL 264599 A | 06-10-2020 |
| | | US 3076775 A | 05-02-1963 |
| JP S4985136 A | 15-08-1974 | KEINE | |
| DE 102010029272 A1 | 01-12-2011 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3076775 A
- JP 49085136 A
- WO 2015082676 A
- US 4748095 A
- US 4931168 A
- US 5618392 A


### In der Beschreibung aufgeführte Nicht-Patentliteratur


- Electrochemistry. Ullmann’s Encyclopedia of Industrial Chemistry
- Acrylic Acid and Derivatives. Ullmann’s Encyclopedia of Industrial Chemsitry
- Esters, Organic. Ullmann’s Encyclopedia of Industrial Chemistry
- Ullmann’s Encyclopedia of Industrial Chemistry
- Ionic Liquids in Synthesis. Wiley VCH, 2003
- Flüssig - Flüssig Extraktion. Ullmann’s Encyclopedia of Industrial Chemistry